# EUROPÄISCHE PATENTSCHRIFT

(11) **EP 3 928 085 B1**
(45) Veröffentlichungstag und Bekanntmachung des Hinweises auf die Patenterteilung: **01.01.2025**
(21) Anmeldenummer: 20705958.5
(22) Anmeldetag: 18.02.2020
(51) Int. Cl.: G01N 23/20008

(54) **MESSANORDNUNG FÜR RÖNTGENSTRAHLUNG FÜR EINE SPALTFREIE 1D-MESSUNG**
MEASUREMENT ARRANGEMENT FOR X-RAY RADIATION FOR GAP-FREE 1D MEASUREMENT
DISPOSITIF DE MESURE DE RAYONNEMENT X POUR UNE MESURE 1D CONTINUE

(30) Priorität: 22.02.2019 DE 102019202442
(43) Veröffentlichungstag der Anmeldung: 29.12.2021
(73) Patentinhaber: Bruker AXS SE, 76187 Karlsruhe (DE)
(72) Erfinder: FINK, Jürgen, 76477 Elchesheim-Illingen (DE); MAURER, Christian, 76187 Karlsruhe (DE); BRÜGEMANN, Lutz, 76448 Durmersheim (DE); VENANZI, Cristian, 76187 Karlsruhe (DE)
(74) Vertreter: Kohler Schmid Möbus Patentanwälte
(86) Internationale Anmeldenummer: PCT/EP2020/054162
(87) Internationale Veröffentlichungsnummer: WO 2020/169559

(56) Entgegenhaltungen:
- EP-A1- 3 243 575
- DE-A1- 102009 045 092
- KENICHI KATO ET AL: "A statistical approach to correct X-ray response non-uniformity in microstrip detectors for high-accuracy and high-resolution total-scattering measurements", JOURNAL OF SYNCHROTRON RADIATION, vol. 26, no. 3, 9 February 2019 (2019-02-09), pages 762 - 773, XP055699293, DOI: 10.1107/S1600577519002145
- P. R. WILLMOTT ET AL: "The Materials Science beamline upgrade at the Swiss Light Source", JOURNAL OF SYNCHROTRON RADIATION., vol. 20, no. 5, 1 September 2013 (2013-09-01), DK, pages 667 - 682, XP055699355, ISSN: 0909-0495, DOI: 10.1107/S0909049513018475
- SCHMITT B ET AL: "Mythen detector system", NUCLEAR INSTRUMENTS & METHODS IN PHYSICS RESEARCH. SECTION A, ELSEVIER BV * NORTH-HOLLAND, NL, vol. 501, no. 1, 21 March 2003 (2003-03-21), pages 267 - 272, XP004420435, ISSN: 0168-9002, DOI: 10.1016/S0168-9002(02)02045-4
- DU RONG ET AL: "Application of Mythen detector:In-situXRD study on the thermal expansion behavior of metal indium", SCIENCE CHINA PHYSICS, MECHANICS & ASTRONOMY, SCIENCE CHINA PRESS, HEIDELBERG, vol. 59, no. 7, 30 March 2016 (2016-03-30), pages 1 - 8, XP035659543, ISSN: 1674-7348, [retrieved on 20160330], DOI: 10.1007/S11433-015-0436-0

## Beschreibung

### Hintergrund der Erfindung

Die Erfindung betrifft eine Messanordnung für Röntgenbeugung, umfassend
- eine mit einem Röntgenstrahl beleuchtbare Probenposition und
- einen Röntgendetektor zur Detektion von der von der Probenposition ausgehenden Röntgenstrahlung, umfassend mehrere Detektormodule,

wobei die Detektormodule jeweils wenigstens eine Aktivzone, in der Röntgenstrahlung detektiert werden kann, und eine Totzone, in der keine Röntgenstrahlung detektiert werden kann und die die wenigstens eine Aktivzone umschließt, aufweisen,
wobei die Detektormodule bezüglich einer Messrichtung einzeln und/oder in Gruppen aufeinanderfolgend angeordnet sind,
wobei die Aktivzonen der Detektormodule jeweils für eine in Messrichtung ortsaufgelöste Detektion der Röntgenstrahlung ausgebildet sind,
und wobei die Gesamtheit der Aktivzonen aller Detektormodule des Röntgendetektors in Messrichtung eine Ausdehnung AM und in einer Querrichtung eine Ausdehnung AQ besitzt, mit AM≥5*AQ, wobei die Querrichtung lokal quer zur Messrichtung und lokal quer zu einer Verbindungsrichtung zur Probenposition verläuft.

Eine solche Messanordnung ist bekannt geworden durch B. Schmitt et al., Nuclear Instruments and Methods in Physics Research A 501 (2003), 267-272 "Mythen detector system".

Röntgenstrahlung kann zur zerstörungsfreien Untersuchung der Kristallstruktur einer zu vermessenden Probe eingesetzt werden. Die Röntgenstrahlung wird dabei an den Gitterebenen der Kristalle in der Probe bzw. den zugehörigen Atomen gebeugt. Aus der räumlichen Verteilung der gebeugten Röntgenstrahlung kann auf die Kristallstruktur bzw. Eigenschaften der zu untersuchenden Probe geschlossen werden.

Zur Detektion von Röntgenstrahlen werden verschiedene Typen von Röntgendetektoren eingesetzt. Nulldimensionale Röntgendetektoren gestatten die Detektion von Röntgenstrahlen in einem nur sehr kleinen Raumwinkelbereich; daher wird während der Messung der Röntgendetektor typischerweise über einen interessierenden Raumwinkelbereich gescannt, etwa mit einem Goniometer. Eindimensionale Detektoren gestatten eine ortsaufgelöste Detektion von Röntgenstrahlung entlang einer Raumrichtung ("Messrichtung"). Zweidimensionale Detektoren gestatten sogar eine ortsaufgelöste Detektion entlang zweier Raumrichtungen, sind aber vergleichsweise teuer.

Eine wichtige Art von Röntgenbeugungsmessung ist die Untersuchung von Pulverproben mit einem Röntgenstrahl, wobei im Beugungsbild so genannte Debye-Ringe auftreten. Diese repräsentieren jeweils bestimmte Gitterabstände im Kristall. Aufgrund der zufälligen Orientierung der einzelnen Körner in einer Pulverprobe zum einfallenden Röntgenstrahls beugt jedes Korn den Röntgenstrahl durch die entsprechende Gitterebenen auf eine vorgegebene Stelle des zugehörigen Debye-Rings, und der Debye-Ring wird durch die Gesamtheit der beugenden Pulverkörner im Wesentlichen gleichmäßig ausgeleuchtet. Entsprechend steckt die Information über die Pulverprobe bereits in einem kleinen Umfangsteil der Debye-Ringe.

Für die Auswertung eines Beugungsbildes einer Pulverprobe ("Pulverdiffraktogramm") genügt daher die ortsaufgelöste Auswertung des Beugungsbildes entlang einer beliebigen radialen Richtung über die Debye-Ringe hinweg. Hierfür kann ein eindimensionaler Röntgendetektor eingesetzt werden.

Man beachte, dass auch bei anderen Arten von Röntgenmessungen eine eindimensionale Messinformation ausreichen kann, um eine gewünschte Information über eine Probe zu erhalten.

Ein Detektormodul für einen typischen eindimensionalen Röntgendetektor umfasst eine Aktivzone und eine die Aktivzone umgebende Totzone. Trifft ein Röntgenquant auf die Aktivzone, wird es detektiert. Trifft ein Röntgenquant auf die Totzone, so wird es nicht detektiert. Die Totzone ist in der Praxis notwendig, um die baulichen Strukturen für die Aktivzone einzurichten. Die Aktivzone des Detektormoduls ist meist entlang einer Messrichtung, in der die Aktivzone eine Ortsauflösung gestattet, länger ausgebildet als quer zu dieser Richtung.

Typische Detektormodule für eindimensionale Röntgendetektoren können als Halbleiter-Detektormodule ausgebildet sein, bei denen die Aktivzone in (oft streifenförmige) Sensorelemente unterteilt ist, mit denen eine Ortsauflösung erreicht wird, vgl. beispielsweise G. Lutz, "Semiconductor Radiation Detectors - Device Physics", Springer-Verlag Berlin, 2. Auflage 2007, Seiten 109-111 und 229-233.

Andere typische Detektormodule für eindimensionale Röntgendetektoren können als Gasdetektoren (auch genannt gasgefüllter Proportionaldetektor) ausgebildet sein, bei denen ein Röntgenquant einen Ladungsimpuls auslöst, der zu gegenüberliegenden Rändern der Aktivzone läuft, so dass aus der Laufzeitdifferenz auf den Auftreffort am Gasdetektor geschlossen werden kann, vgl. beispielsweise G. F. Knoll, "Radiation Detection and Measurement", John Wiley and Sons, Inc., New York, Second Edition 1989, Seite 190, oder auch F. H. W. Heuck, E. Macherauch, "Forschung mit Röntgenstrahlen Bilanz eines Jahrhunderts (1895-1995)", Springer-Verlag Berlin 1995, Seiten 359-360. Ein bogenförmiger Gasdetektor ist beispielsweise auch in L. Spieß et al., "Moderne Röntgenbeugung - Röntgendiffraktometrie für Materialwissenschaftler, Physiker und Chemiker", B.G. Teubner Verlag / GWV Fachverlage GmbH, Wiesbaden 2005, Bild 4.23 (Seite 126), bekannt geworden. Entsprechende Röntgendiffraktometer sind beispielsweise durch das ARL EQUINOX 100 Benchtop x-ray diffractometer der Firma Thermo Fisher Scientific, vgl. Firmendruckschrift "Thermo Scientific ARL EQUINOX 100 X-ray diffractometers", 11/2018, oder auch durch den FCT-ACTech Continuous On Stream Mineral Analyser COSMA, vgl. http://www.fct-actech.com/site/pages/equipment.php, heruntergeladen am 8.2.2019, bekannt; diese können mit gebogenen ortsauflösenden Detektoren, wie sie von der Firma INEL Inc., Stratham NH, USA, angeboten werden, ausgestattet werden, vgl. http://www.inel.us/index.php/accessories-xrd-inel-company/detector-curved-inel-company, heruntergeladen am 8.2.2019. Gasdetektoren sind jedoch in der globalen Zählrate begrenzt (meist um 1 Mcps), und weisen im Vergleich zu halbleiterbasierten Detektormodulen eine schlechtere Ortsauflösung und Energieauflösung und zudem eine begrenzte Haltbarkeit auf.

Um Messbereiche abzudecken, die länger sind als die Aktivzone eines einzelnen Detektormoduls, ist es möglich, das Detektormodul während der Messung zu verfahren. Dies ist jedoch apparativ zeitaufwändig und verlängert die Messdauer.

Aus der Messanordnung "Mythen detector system" von B. Schmitt et al., aaO, ist es bekannt, zwölf planare halbleiterbasierte Detektormodule auf einem Kreisbogen hintereinander anzuordnen, so dass die Detektormodule insgesamt einen ca. 12 mal größeren Winkelbereich gleichzeitig vermessen können als ein einzelnes Detektormodul.

Bei dieser Anordnung hat die Vermessung des Beugungsbildes entlang des Kreisbogens jedoch Lücken im Bereich der Totzonen, die die Aktivzonen der Detektormodule jeweils umgeben. Auf Beugungsinformationen aus dem Bereich der Lücken muss entsprechend verzichtet werden, oder aber die Detektormodule müssen entlang des Kreisbogens versetzt werden und die Messung dann wiederholt werden, um vollständige Beugungsinformationen zu erhalten.

P.R. Willmott et al., J. Synchrotron Rad. (2013) 20, S. 667-682 beschreibt einen verbesserten Röntgendetektor vom Typ Mythen II, wobei um eine Probenposition herum zwei Gruppen von Detektormodulen angeordnet sind. Die erste Gruppe von Detektormodulen umfasst bei einem ersten Radius azimutal hintereinander angeordnete Detektormodule, und die zweite Gruppe umfasst bei einem zweiten Radius azimutal hintereinander angeordnete Detektormodule, wobei der zweite Radius größer ist als der erste Radius. An azimutalen Lücken der ersten Gruppe von Detektoren sind Detektoren aus der zweiten Gruppe angeordnet und umgekehrt. Die Detektormodule verfügen jeweils über in azimutaler Richtung aufeinanderfolgende Sensorelemente.

Durch den Bogendetektor CirPAD der Firma imXPAD in Kooperation mit der Firma Synchrotron SOLEIL, Gif-sur-Yvette, Frankreich, ist ein Röntgendetektor bekannt geworden, bei dem die Detektormodule entlang eines Kreisbogens angeordnet sind, wobei die Anordnung verkleinerte Modulabstände ermöglichen soll, vgl. https://www.synchrotron-soleil.fr/en/news/new-detector-diffabs-fast-measurements-x-ray-diffraction-imaqes, heruntergeladen am 7.2.2019. Der CirPAD-Detektor ist auch in der Präsentation "Résolution de structures à partir de diagrammes de diffraction de poudres", Erik Elkaim, Ecole de Cristallographie 17.-21. Oktober 2016, dortige Folie 12 erwähnt.

Aus Ch. Broennimann et al. , J. Synchrotron Rad. (2006). 13, 120-130 "The PI-LATUS 1M Detector" ist ebenfalls ein Röntgendetektor bekannt geworden, bei der eine teilweise Überlappung von Detektormodulen eingerichtet ist, indem die Detektormodule bezüglich einer lokalen Verbindungsrichtung zur Probenposition hin hintereinander (mit linear zunehmendem Versatz) angeordnet sind. Durch Absorption von Röntgenquanten im jeweils vorderen Sensor verbleiben allerdings Bereiche ohne Detektion.

Weitere Röntgendetektoren mit halbleiterbasierten Detektormodulen sind durch den HyPix-Arc 150° der Firma Rigaku, vgl. https://www.rigaku.com/en/arc, heruntergeladen am 8.2.2019, oder die Röntgendiffraktometer der Firma Stresstech, vgl. z.B. Firmendruckschrift "Xstress 3000 G3/G3R", Stresstech GmbH, Rennerod, DE, undatiert, heruntergeladen 8.2.2019, oder den SmartSite RS portable stress analyzer der Firma Rigaku, vgl. https://www.rigaku.com/en/products/xrd/smartsite-rs, heruntergeladen am 8.2.2019, oder auch durch die US 2017/0097309 A1 bekannt geworden.

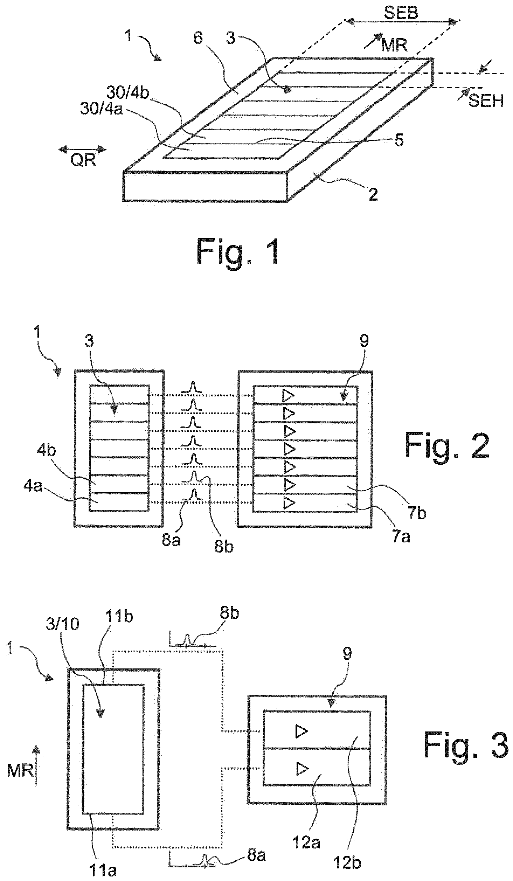

In der Vergangenheit wurden auch Röntgenbeugungsbilder auf Photopapier (Film), einschließlich gebogenem Photopapier, angefertigt, vgl. Fig. 2.3.4.1 der "International Tables for Crystallography".

Aus der DE 10 2009 045 092 A1 ist zudem ein Röntgendetektor für ein computertomographisches bildgebendes System bekannt geworden, bei dem Detektormodule in Überlappungsbereichen in Strahlausbreitungsrichtung hintereinander angeordnet sind.

### Aufgabe der Erfindung

Es ist Aufgabe der Erfindung, eine Messanordnung zur Verfügung zu stellen, mit der auf einfache und schnelle Weise eine lückenlose eindimensionale Messinformation über eine Messprobe erlangt werden kann.

### Beschreibung der Erfindung

Diese Aufgabe wird erfindungsgemäß gelöst durch eine Messanordnung für Röntgenbeugung gemäß Anspruch 1.

Die erfindungsgemäße Messanordnung sieht dabei vor, dass zumindest ein Teil der bezüglich der Messrichtung aufeinanderfolgenden Detektormodule Überlappungsbereiche ausbildet, in denen jeweils wenigstens zwei Detektormodule in Messrichtung überlappen und in Querrichtung nebeneinander angeordnet sind, wobei die Aktivzonen der Detektormodule in den Überlappungsbereichen sich in Messrichtung unmittelbar aneinander anschließen oder in Messrichtung überlappen, so dass die Gesamtheit der Aktivzonen der Detektormodule eine in Messrichtung lückenlose Vermessung von der von der Probenposition ausgehenden Röntgenstrahlung ermöglicht,
und wobei die Detektormodule entlang eines Kreisbogens um die Probenposition überlappend angeordnet sind, wobei der Kreisbogen die lokale Messrichtung an jedem Detektormodul definiert, und die Detektormodule jeweils auf einem ebenen Substrat ausgebildet sind, das senkrecht zur lokalen Verbindungsrichtung zur Probenposition orientiert ist, und wobei am jeweiligen Detektormodul die Messrichtung, die Querrichtung und die Verbindungsrichtung näherungsweise senkrecht zueinander sind.

Die erfindungsgemäße Messanordnung dient zur einfachen und lückenlosen Bestimmung von 1D-Messdaten bzw. Messinformationen über eine Messprobe. Die Detektormodule bzw. deren Aktivzonen können jeweils in Messrichtung aufgelöste Messdaten (Intensität als Funktion der Position in Messrichtung) zur Verfügung stellen. Über die Gesamtheit der Detektormodule kann durch die eingerichteten Überlappungsbereiche ein lückenloser Gesamt-Messdatensatz (Intensität als Funktion der Position in Messrichtung) über die in Messrichtung aufeinanderfolgenden Detektormodule hinweg zur Verfügung gestellt werden. Insbesondere erzeugen die unvermeidlichen Totbereiche der einzelnen Detektormodule (insbesondere an den Enden, bezogen auf die Messrichtung) keine Lücken im Gesamtdatensatz. Typischerweise bilden alle Detektormodule des erfindungsgemäßen Röntgendetektors zu allen ihren in Messrichtung nächst benachbarten Detektormodulen Überlappungsbereiche aus.

Durch die erfindungsgemäßen Überlappungsbereiche wird erreicht, dass die Totzone eines Detektormoduls, soweit diese nicht von wenigstens einer Aktivzone dieses Detektormoduls selbst in Messrichtung überlappt wird, durch eine Aktivzone wenigstens eines weiteren Detektormoduls in Messrichtung überlappt wird. Dieses weitere Detektormodul ist in Querrichtung zumindest teilweise neben dem Detektormodul angeordnet, was konstruktiv einfach ist und eine gegenseitige Abschattung des Detektormoduls und des weiteren Detektormoduls bzw. zumindest von deren Aktivzonen bezüglich der Verbindungsrichtung zur Probenposition vermeidet. Das Detektormodul und das weitere Detektormodul sind entsprechend typischerweise an identischen Positionen in Verbindungsrichtung angeordnet und liegen bezüglich der Verbindungsrichtung nicht übereinander, und insbesondere liegt das Detektormodul bezüglich der Verbindungsrichtung nicht über einer Aktivzone des weiteren Detektormoduls und umgekehrt.

Im Rahmen der Erfindung sind die Detektormodule entlang des Kreisbogens überlappend angeordnet, an dessen Mittelpunkt die Probenposition angeordnet ist, und der Kreisbogen definiert die lokale Messrichtung an jedem Detektormodul. Es können besonders genaue Beugungsmessungen, mit nur geringen Messfehlern durch Parallax-Effekte, durchgeführt werden. Die Messrichtung kann hier (näherungsweise) senkrecht zur lokalen Verbindungsrichtung zur Probe geführt werden; man beachte, dass in der Praxis der insgesamt gekrümmte Verlauf der Messrichtung lokal abschnittweise durch einen geraden Verlauf (gerade Substrate der einzelnen Detektormodule) und Knicke (an Substratübergängen) angenähert wird.

Die Detektormodule jeweils auf einem ebenem Substrat angeordnet, das senkrecht zur lokalen Verbindungsrichtung zur Probenposition liegt. Dies verbindet einen einfach praktikablen, kostengünstigen Aufbau der Detektormodule mit geringen Messfehlern.

Im Falle einer typischen Pulverdiffraktometrie-Messung ist entlang eines Debye-Rings überall die gleiche Beugungsinformation über die Probe enthalten, so dass am Ort einer Totzone des Detektormoduls ein Ausweichen entlang des Debye-Rings, und damit im Wesentlichen quer zur Messrichtung und quer zur Verbindungsrichtung zur Probe, auf eine Aktivzone des weiteren Detektormoduls das Messergebnis nicht beeinträchtigt. Im Gegenteil, durch dieses Vorgehen kann die eindimensionale Beugungsinformation vielmehr vervollständigt werden. Selbst wenn der Debye-Ring eine von der Kreisform abweichende Form, etwa eine durch mechanische Spannungen bedingte elliptische Form, aufweisen sollte, so wäre doch zumindest lokal der Radius und ggf. die Breite (Schärfe) des Debye-Rings nahezu konstant, insbesondere, wenn durch das Ausweichen mittels des weiteren Detektormoduls eine Veränderung des Umfangswinkels am Debye-Ring 10° oder weniger beträgt, bevorzugt 5° oder weniger.

Die Messanordnung kann insbesondere mit dem Röntgendetektor stationär (und auch mit stationärer Röntgenquelle bzw. stationärem Röntgenstrahl, der die Probenposition beleuchtet) oder lediglich mit Bewegungskomponenten quer zur Messrichtung (also nur einer Drehachse) genutzt werden, was einen kompakten Aufbau und schnelle Messungen ermöglicht.

Der Röntgendetektor besitzt erfindungsgemäß ein großes Aspektverhältnis der Gesamtheit der Aktivzonen aller Detektormodule, meist gilt sogar AM≥8*AQ oder AM≥10*AQ. Bei typischen erfindungsgemäße Bauformen gilt weiterhin AM ≥ 200 mm und AQ ≤ 40 mm. Mit diesen Bauformen kann eine eindimensionale Messinformation bequem und bei kompaktem und kostengünstigem Aufbau erreicht werden.

Typischerweise weist die gesamte Messanordnung bzw. der Röntgendetektor eine große Zahl von in Messrichtung aufeinander folgenden Detektormodulen auf, beispielsweise wenigstens 10 oder wenigstens 20. Hingegen liegen in Querrichtung in der Regel nur wenige Detektormodule nebeneinander, beispielsweise nur maximal 3 oder maximal 2, oder die Detektormodule sind gar nur in einer Reihe, die in Messrichtung verläuft, angeordnet.

Man beachte, dass die Querrichtung typischerweise näherungsweise und bevorzugt genau senkrecht zur (lokalen) Verbindungsrichtung zur Probenposition und zur (lokalen) Messrichtung verläuft; kleine Abweichungen (etwa bis 10° oder bis etwa 5°) sind aber meist unproblematisch (etwa in Hinblick auf die räumliche Auflösung der Messinformation). Die Messrichtung verläuft ebenfalls typischerweise näherungsweise senkrecht und bevorzugt genau senkrecht zur (lokalen) Verbindungsrichtung zur Probenposition; kleine Abweichungen (etwa bis 10° oder bis etwa 5°) sind aber wiederum meist unproblematisch (etwa in Hinblick auf Parallax-Effekte). Man beachte, dass bei gerade verlaufender Messrichtung auch größere Abweichungen vorkommen könnten.

Die erfindungsgemäße Messanordnung bzw. der Röntgendetektor stellt im Wesentlichen einen 1D-Detektor für Röntgenstrahlung dar. Im einfachsten Fall besitzt die Messanordnung - abgesehen von einer etwaigen Nebeneinanderanordnung von Detektormodulen bezüglich der Querrichtung zum Übergreifen von Totzonen - keine Ortsauflösung in Querrichtung. Soweit die Aktivzonen der einzelnen Detektormodule eine Ortsauflösung auch in Querrichtung besitzen, so wird diese in der Regel nicht zur Charakterisierung der Messprobe genutzt.

### Bevorzugte Ausführungsformen

Eine bevorzugte Ausführungsform der erfindungsgemäßen Messanordnung sieht vor,
dass die Detektormodule erste Detektormodule und zweite Detektormodule umfassen,
wobei die ersten Detektormodule in einer ersten Reihe in der Messrichtung hintereinander angeordnet sind, und die zweiten Detektormodule in zumindest einer zweiten Reihe in der Messrichtung hintereinander angeordnet sind,
dass die erste Reihe und die zumindest eine zweite Reihe bezüglich der Querrichtung nebeneinander angeordnet sind,
und dass die ersten Detektormodule gegenüber den zweiten Detektormodulen in Messrichtung gegeneinander versetzt angeordnet sind, so dass die Aktivzonen der zweiten Detektormodule Totzonen der ersten Detektormodule, die in Messrichtung nicht von Aktivzonen der ersten Detektormodule überlappt werden, in Messrichtung überlappen. Die Anordnung der ersten und zweiten Detektormodule in einer ersten und wenigstens einer zweiten Reihe ist konstruktiv besonders einfach. Man beachte, dass die Reihen entlang von (parallelen) Kreisbögen verlaufen. Typischerweise überlappen die ersten und zweiten Detektormodule nicht in der Querrichtung.

Besonders bevorzugt ist eine Weiterbildung dieser Ausführungsform, bei der für eine erste Länge L1 in Messrichtung, über die sich die Aktivzone oder Aktivzonen eines ersten Detektormoduls erstrecken, und für eine zweite Länge L2 in Messrichtung, die zwischen den Aktivzonen von in der wenigstens einen zweiten Reihe in Messrichtung aufeinander folgenden zweiten Detektormodulen liegt, die beide einen Überlappungsbereich mit dem ersten Detektormodul ausbilden, jeweils gilt: L2 ≥ 0,2*L1, bevorzugt L2 ≥ 0,4*L1. Weiter besonders bevorzugt gilt auch L2 ≥ 0,6*L1 oder L2 ≥ 0,8*L1, oder auch L1=L2. In Bereichen, die die Aktivzone oder Aktivzonen des ersten Detektormoduls in Messrichtung abdeckt, ist grundsätzlich keine Überlappung mit den Aktivzonen der zweiten Detektormodule nötig. Entsprechend können aktivzonenfreie Bereiche in der zweiten Reihe verbleiben, was den konstruktiven Aufwand und damit die Herstellungskosten der Messanordnung gering hält.

Ebenfalls bevorzugt ist eine Weiterbildung, die vorsieht, dass die erste Reihe und die wenigstens eine zweite Reihe wenigstens eine abstandbehaftete Reihe umfassen, in der die in Messrichtung aufeinanderfolgenden Detektormodule bezüglich der Messrichtung mit einem Abstand AB voneinander beabstandet angeordnet sind, insbesondere wobei gilt AB≥0,3*LM, mit LM: Länge der Detektormodule in der abstandsbehafteten Reihe in Messrichtung. Bevorzugt gilt auch AB≥0,5*LM. In Bereichen, die die Aktivzone oder Aktivzonen des ersten Detektormoduls in Messrichtung abdeckt, ist grundsätzlich keine Überlappung mit den Aktivzonen der zweiten Detektormodule nötig. Entsprechend können Bereiche in der zweiten Reihe leer (ohne Detektormodul) bleiben, was wiederum den konstruktiven Aufwand und damit die Herstellungskosten der Messanordnung gering hält.

Bei einer bevorzugten Ausführungsform sind die Detektormodule in lediglich einer Reihe in der Messrichtung hintereinander angeordnet, wobei in den Überlappungsbereichen die Detektormodule auch in der Querrichtung überlappen. Dadurch ist ein besonders schmaler (in Querrichtung kompakter) Aufbau möglich, so dass ortsgenaue und streustrahlungsarme Messungen durchgeführt werden können.

Bevorzugt ist in einer Ausführungsform vorgesehen, dass die Detektormodule in den Überlappungsbereichen näherungsweise keilförmig und/oder verzahnt ausgebildet sind. Dadurch kann auf einfache Weise ein Überlapp oder Stoß der Aktivzonen im Überlappbereich eingerichtet werden, insbesondere auch innerhalb nur einer Reihe von Detektormodulen. Mittels keilförmig ausgebildeten Detektormodulen kann auch eine besonders einfache gegenseitige Positionierung (bzw. Justierung) erfolgen.

Bevorzugt ist auch eine Ausführungsform, bei der in den Überlappungsbereichen die Aktivzonen der überlappenden Detektormodule in Messrichtung in Doppelmessbereichen überlappen. Durch die Einrichtung von Doppelmessbereichen kann eine größere Montagetoleranz zugelassen werden, ohne dass die Entstehung einer Lücke in Messrichtung befürchtet werden muss. Zudem kann in den Doppelmessbereichen im Allgemeinen eine höhere Zählrate zur Verbesserung der statistischen Relevanz der Messdaten erreicht werden; allerdings muss dann eine Kalibrierung erfolgen, um die Intensitäten in Doppelmessbereichen und zwischen Doppelmessbereichen vergleichbar zu machen.

Bei einer bevorzugten Weiterbildung dieser Ausführungsform sind die Aktivzonen der Detektormodule in den Doppelmessbereichen bezüglich der Querrichtung verkürzt ausgebildet im Vergleich zu außerhalb der Doppelmessbereiche. Dadurch kann eine Einstellung der effektiven, gesamten Sensorlänge in Querrichtung an einer jeweiligen Position entlang der Messrichtung erfolgen, insbesondere eine überall gleiche effektive, gesamte Sensorlänge, um eine Kalibrierung zu vermeiden.

Bei einer anderen, vorteilhaften Ausführungsform ist vorgesehen, dass in den Überlappungsbereichen die Aktivzonen der überlappenden Detektormodule in Messrichtung nicht überlappen. In diesem Fall überlappt in Messrichtung lediglich die Totzone eines Detektormoduls mit der Aktivzone eines anderen Detektormoduls; die Aktivzonen der Detektormodule schließen dann aber unmittelbar aneinander an. Es ist nicht erforderlich, die Zählraten von verschiedenen Detektormodulen zu einer bestimmten Position entlang der Messrichtung zusammenzuzählen, um die Intensität für diese Position zu bestimmen, was die Auswertung der Sensordaten besonders einfach macht.

Bevorzugt ist auch eine Ausführungsform, bei der die wenigstens eine Aktivzone eines jeweiligen Detektormoduls mehrere in Messrichtung aufeinanderfolgende Sensorstreifen aufweist, die sich zumindest im Wesentlichen in Querrichtung erstrecken. Die Sensorstreifen ermöglichen eine Ortsauflösung in Messrichtung; jeder Streifen richtet eine (Mess-)Position in (bzw. entlang der) Messrichtung ein. Ein Sensorstreifen bildet am einfachsten einen einheitlichen Sensorbereich aus, der als Ganzes vermessen wird (also nur ein Sensorelement). Alternativ kann der Sensorstreifen auch aus mehreren Messpixeln (mehreren Sensorelementen) aufgebaut sein, die in Querrichtung hintereinander angeordnet sind. Die Sensorstreifen sind typischerweise näherungsweise rechteckförmig ausgebildet. Aufeinanderfolgende Sensorstreifen schließen sich in Messrichtung typischerweise unmittelbar aneinander an, so dass diese eine geschlossene Aktivzone ausbilden. Die Sensorstreifen eines Detektormoduls sind typischerweise parallel zueinander angeordnet. Detektormodule mit Sensorstreifen sind typischerweise als Halbleitermodule eingerichtet. Man beachte, dass alternativ zu Sensorstreifen ein Detektormodul eine Ortsauflösung in Messrichtung auch anderweitig einrichten kann, etwa durch Laufzeitunterschiede von Ladungsimpulsen (wie in einem gasdetektorbasierten Detektormodul).

Bevorzugt ist eine Weiterbildung dieser Ausführungsform, wobei an allen Positionen entlang der Messrichtung eine summierte effektive Streifenlänge in Querrichtung der Sensorstreifen aller Detektormodule, die an der jeweiligen Position einen Sensorstreifen ausbilden, gleich ist. Dadurch ist es möglich, eine Intensitätsverteilung entlang der Messrichtung durch einfache Addition der Zählraten der Sensorstreifen an einer jeweiligen Position entlang der Messrichtung zu bestimmen; eine Kalibrierung zwischen verschiedenen Positionen ist nicht erforderlich.

Bevorzugt ist auch eine Weiterbildung, bei der zumindest ein Teil der Sensorstreifen, bevorzugt jeder Sensorstreifen, wenigstens ein Sensorelement aufweist, das ein Sensorelement-Aspektverhältnis SEAV ≥ 3 aufweist, wobei SEAV = SEB/SEH und SEB: Breite des Sensorelements in Querrichtung, und SEH: Höhe des Sensorelements in Messrichtung. Mit den solchermaßen in Querrichtung ausgedehnten Sensorelementen kann die Zählrate erhöht und die statistische Qualität der Messdaten verbessert werden. Zumindest lokal verändert sich die Beugungsinformation einer typischen Messprobe entlang der Querrichtung nicht, so dass durch diese Integration keine Probeninformation verloren geht.

Bevorzugt ist auch eine Weiterbildung, bei der die Sensorstreifen näherungsweise rechteckförmig ausgebildet sind, wobei die Längsseiten der Sensorstreifen sich in Querrichtung erstrecken, und wobei in Messrichtung aufeinanderfolgende Sensorstreifen einer jeweiligen Aktivzone mit ihren Längsseiten aneinander anliegen. Entsprechende Detektormodule sind einfach herzustellen und einfach zu montieren, insbesondere zu justieren.

Bei einer Ausführungsform ist vorgesehen,
dass in den Überlappungsbereichen die Aktivzonen der überlappenden Detektormodule in Messrichtung in Doppelmessbereichen überlappen,
dass die Aktivzonen der Detektormodule in den Doppelmessbereichen bezüglich der Querrichtung verkürzt ausgebildet sind im Vergleich zu außerhalb der Doppelmessbereiche,
dass die wenigstens eine Aktivzone eines jeweiligen Detektormoduls mehrere in Messrichtung aufeinanderfolgende Sensorstreifen aufweist, die sich zumindest im Wesentlichen in Querrichtung erstrecken,
und dass an allen Positionen entlang der Messrichtung eine summierte effektive Streifenlänge in Querrichtung der Sensorstreifen aller Detektormodule, die an der jeweiligen Position einen Sensorstreifen ausbilden, gleich ist.

Bevorzugt ist eine Ausführungsform, bei der die Detektormodule als Halbleiter-Detektormodule ausgebildet sind. Halbleiter-Detektormodule sind vergleichsweise kostengünstig, können eine hohe Ortsauflösung bieten (z.B. 50 µm oder besser) und sind (im Vergleich zu Gasdetektoren) auch für größere Gesamtzählraten geeignet und wartungsarm. Alternativ können beispielsweise auch Detektormodule auf Basis von Gasdetektoren eingesetzt werden; mit diesen kann ein gekrümmter Verlauf der Messrichtung sehr exakt nachgebildet werden.

Bei einer bevorzugten Ausführungsform ist vor den Detektormodulen eine Maske angeordnet, die zumindest Teilflächen von zumindest einem Teil der Aktivzonen der Detektormodule gegenüber der Probenposition abschattet und dadurch eine nutzbare Breite der Gesamtheit der Aktivzonen in Querrichtung gegenüber einer vollen Breite der Gesamtheit der Aktivzonen ohne Abschattung reduziert. Durch die Maske kann die Detektionsbreite in Querrichtung begrenzt werden, um für einen Scan in Querrichtung eine hohe Ortsauflösung zu erzielen. Das Signal-zu-Untergrund-Verhältnis kann sich zudem signifikant verbessern, da die aktive Fläche (genutzte Aktivzone) durch die Maske auf diejenige Röntgenstrahlung mit dem größten Anteil an Nutzsignal konzentriert werden kann. Wenn die Aktivzonen nicht nur für eine ortsaufgelöste Detektion in Messrichtung, sondern auch für eine ortsaufgelöste Detektion in Querrichtung ausgebildet sind, können auch unerwünschte Teile der Aktivzonen bei der Messung oder Auswertung ignoriert werden ("virtuelle Maske").

In den Rahmen der vorliegenden Erfindung fällt auch die Verwendung einer erfindungsgemäßen, oben beschriebenen Messanordnung zur Vermessung einer Messprobe,
wobei die Messprobe mit einem Röntgenstrahl bestrahlt und an der Probenposition angeordnet oder mit einer Röntgenoptik auf die Probenposition abgebildet wird,
und wobei Messdaten der Detektormodule, die gleichzeitig gemessen wurden, zu einem eindimensionalen, bezüglich der Positionen entlang der Messrichtung lückenlosen Gesamt-Messdatensatz zusammengefasst werden,
wobei an Positionen entlang der Messrichtung, in denen in einem Überlappungsbereich von wenigstens zwei Detektormodulen lediglich ein Totbereich wenigstens eines der überlappenden Detektormodule liegt, Messdaten wenigstens eines anderen der überlappenden Detektormodule genutzt werden, das an dieser Position eine Aktivzone hat, um den durchgehenden Gesamt-Messdatensatz zu bestimmen. Mit diesem Vorgehen kann auf einfache und schnelle Weise mit geringem apparativem Aufwand eine eindimensionale Vermessung (Röntgenbeugungsmessung) einer Messprobe erfolgen. In einem einzigen, kurzen Belichtungsintervall werden zeitgleich alle von der Gesamtheit der Detektormodule abgedeckten Beugungsringe aufgenommen. Typischerweise erfolgt die Bestrahlung der Messprobe und die Anordnung des Röntgendetektors in einer Weise, dass in Querrichtung die am Röntgendetektor eintreffende Röntgenstrahlung (zumindest über AQ hinweg) redundante Information enthält, beispielsweise aufgrund der Breite des die Messprobe anregenden Röntgenstrahls.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt in schematischer Schrägansicht ein Detektormodul für eine erfindungsgemäße Messanordnung, ausgebildet als Halbleiter-Detektormodul mit Sensorstreifen;
- Fig. 2: zeigt das Detektormodul von Fig. 1 in schematischer Aufsicht, einschließlich schematischer Darstellung der zugehörigen Messkanäle;
- Fig. 3: zeigt ein weiteres Detektormodul für eine erfindungsgemäße Messanordnung in schematischer Aufsicht, ausgebildet als Gasdetektor-Detektormodul, einschließlich schematischer Darstellung der zugehörigen Messkanäle;
- Fig. 4: zeigt eine schematische Aufsicht auf eine erfindungsgemäße Messanordnung, gemäß einer ersten Ausführungsform, mit zwei Reihen von Detektormodulen;
- Fig. 5: zeigt eine schematische Aufsicht auf eine erfindungsgemäße Messanordnung, gemäß einer zweiten Ausführungsform, mit drei Reihen von Detektormodulen;
- Fig. 6: zeigt eine schematische Aufsicht auf eine erfindungsgemäße Messanordnung, gemäß einer dritten Ausführungsform, mit drei Reihen von Detektormodulen, mit in Querrichtung ortsaufgelösten Aktivzonen;
- Fig. 7: zeigt eine schematische Aufsicht auf eine erfindungsgemäße Messanordnung, gemäß einer vierten Ausführungsform, mit einer Reihe von verzahnten Detektormodulen, jeweils aufweisend zwei Aktivzonen;
- Fig. 8: zeigt eine schematische Aufsicht auf eine erfindungsgemäße Messanordnung, gemäß einer fünften Ausführungsform, mit einer Reihe von alternierend angeordneten, keilförmigen Detektormodulen, jeweils aufweisend drei Aktivzonen;
- Fig. 9: zeigt eine schematische Aufsicht auf eine erfindungsgemäße Messanordnung, gemäß einer sechsten Ausführungsform, mit einer Reihe von alternierend angeordneten, keilförmigen Detektormodulen, jeweils aufweisend eine Aktivzone;
- Fig. 10: zeigt eine schematische Aufsicht auf eine erfindungsgemäße Messanordnung, gemäß einer siebten Ausführungsform, mit einer Reihe von gleichsinnig angeordneten, keilförmigen Detektormodulen, jeweils aufweisend eine Aktivzone;
- Fig. 11: zeigt schematisch einen Teilausschnitt der Messanordnung gemäß Fig. 4, in schematischer Aufsicht, mit Anordnung einer Maske;
- Fig. 12: zeigt schematisch einen ersten Messaufbau, umfassend eine erfindungsgemäße Messanordnung ähnlich Fig. 9, mit kreisbogenförmig verlaufender Messrichtung, entlang derer die Detektormodule angeordnet sind;
- Fig. 13: zeigt schematisch einen zweiten Messaufbau, umfassend eine erfindungsgemäße Messanordnung ähnlich Fig. 4, mit kreisbogenförmig verlaufender Messrichtung, entlang derer die Detektormodule angeordnet sind, und mit einer Fördereinrichtung für Messproben;
- Fig. 14: zeigt schematisch einen dritten Messaufbau zur allgemeinen Erläuterung, umfassend eine Messanordnung ähnlich Fig. 4, mit gerade verlaufender Messrichtung, entlang derer die Detektormodule angeordnet sind.

Die **Fig. 1** zeigt in schematischer Schrägansicht ein Detektormodul 1 für eine erfindungsgemäße Messanordnung.

Das Detektormodul 1 ist hier als Halbleiter-Detektormodul mit einem planaren (ebenen) Substrat 2 ausgebildet. Es weist eine Aktivzone 3 auf, die hier mit einer Vielzahl von Sensorstreifen ausgebildet ist; beispielshaft wurden hier zwei Sensorstreifen 4a, 4b mit Bezugszeichen markiert und insgesamt sechs Sensorstreifen dargestellt; in der Praxis weist ein Detektormodul 1 meist deutlich mehr Sensorstreifen auf, beispielsweise wenigstens 64 Sensorstreifen oder sogar wenigstens 96 Sensorstreifen (nicht näher dargestellt). Die Sensorstreifen 4a, 4b sind hier rechteckförmig ausgeführt, und liegen mit ihren langen Seiten 5 aneinander an. Die Sensorstreifen 4a, 4b sind dabei entlang einer (vorgesehenen) Messrichtung MR aufgereiht und erstrecken sich jeweils entlang einer Querrichtung QR, und weisen hier jeweils nur ein durchgehendes Sensorelement 30 auf. Im gezeigten Ausführungsbeispiel ist die Breite SEB der Sensorelemente 30 in Querrichtung QR ca. 5 mal so groß wie die Höhe SEH der Sensorelemente 30 in Messrichtung MR, so dass das Sensorelement-Aspektverhältnis SEAV = SEB / SEH = 5 beträgt.

Röntgenquanten (Photonen mit einer Energie zwischen 1 keV und 250 keV) können innerhalb der Aktivzone 3 detektiert werden, wobei der Sensorstreifen 4a, 4b, in welchem das Röntgenquant detektiert wird, den Ort der Registrierung entlang der Messrichtung MR anzeigt. Entsprechend erfolgt über die Sensorstreifen 4a, 4b eine Ortsauflösung bezüglich der Messrichtung MR. Im gezeigten Ausführungsbeispiel ist ein jeweiliger Sensorstreifen 4a, 4b in Querrichtung QR in nur einem durchgehenden Sensorelement 30 ausgebildet, so dass es hier nicht möglich ist, eine Ortsauflösung in Querrichtung QR innerhalb der Sensorstreifen 4a, 4b zu erlangen.

Die Aktivzone 3 ist von einer so genannten Totzone 6 umgeben, wobei die Totzone 6 hier einen rechteckförmigen Rahmen um die Aktivzone 3 ausbildet. Röntgenquanten, die in der Totzone 6 auf das Detektormodul 1 treffen, werden nicht registriert. Totzonen 6 sind bei Detektormodulen 1 grundsätzlich aus konstruktiven Gründen unvermeidlich.

Die **Fig. 2** illustriert die elektrische Verschaltung eines Detektormoduls 1 ähnlich wie in Fig. 1 gezeigt noch einmal näher. Jedem Sensorstreifen 4a, 4b der Aktivzone 3 des Detektormoduls 1 ist ein Messkanal 7a, 7b einer Auswerteelektronik 9 zugeordnet. Ein auf einen bestimmten Sensorstreifen 4a, 4b treffendes Röntgenquant erzeugt einen Ladungsimpuls 8a, 8b, der im zugehörigen Messkanal 7a, 7b registriert wird. In der Fig. 2 ist hier für jeden Sensorstreifen 4a, 4b ein Ladungsimpuls 8a, 8b illustriert; man beachte, dass jedes Röntgenquant in der Regel nur einen Ladungsimpuls 8a, 8b auslöst, der in nur einem der Messkanäle 7a, 7b registriert wird.

**Fig. 3** zeigt eine alternative Bauform eines Detektormoduls 1 für eine erfindungsgemäße Messanordnung. Das Detektormodul 1 ist hier mit einem Gasdetektor ausgebildet. Die Aktivzone 3 des Detektormoduls 1 wird hier durch ein Fenster 10 eines Gasraums gebildet. Ein in die Aktivzone 3 eindringendes Röntgenquant löst eine lokale Ionisierung des Gases im Gasraum aus, und die erzeugten positiven und negativen Ladungen driften zu einer ersten (hier unteren) Elektrode 11a und zu einer zweiten (hier oberen) Elektrode 11b am Rand des Gasraums. Die Elektroden 11a, 11b sind jeweils mit einem Messkanal 12a, 12b einer Auswerteelektronik 9 verbunden. Am Messkanal 12a, 12b wird der Auftreffzeitpunkt des jeweiligen Ladungsimpulses 8a, 8b vermessen. Aus einer Differenz der Auftreffzeitpunkte der Ladungsimpulse 8a, 8b kann auf den Ort des Auftreffens des Röntgenquants im Gasraum bzw. in der Aktivzone 3 bezüglich der Messrichtung MR geschlossen werden.

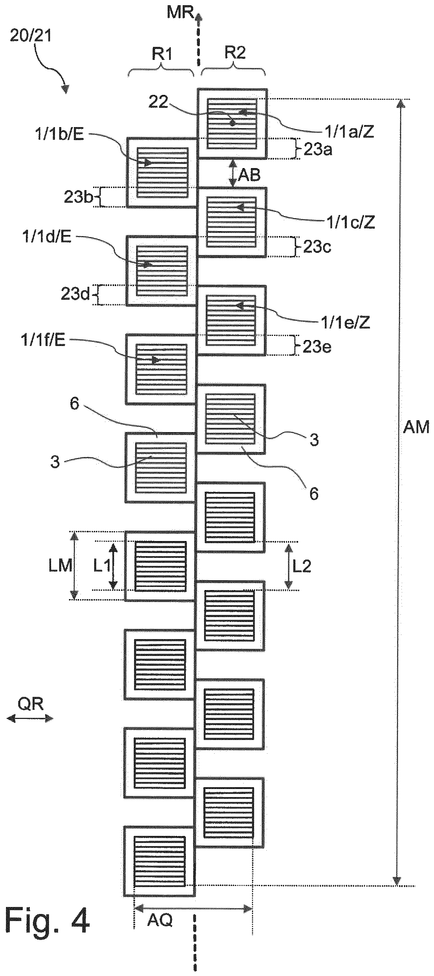

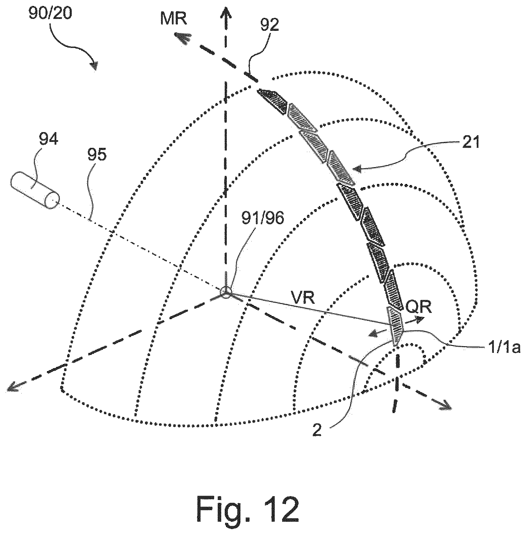

Die **Fig. 4** zeigt eine erste Ausführungsform einer erfindungsgemäßen Messanordnung 20 für Röntgenstrahlung. Die Messanordnung 20 verfügt über eine Vielzahl von Detektormodulen 1, die hier ähnlich wie in Fig. 1 dargestellt als Halbleiter-Detektormodule mit durchgehenden Sensorstreifen für eine Ortsauflösung entlang der Abfolgerichtung der Sensorstreifen ausgebildet sind. Die Detektormodule 1 bilden die wesentlichen Komponenten eines Röntgendetektors 21 der Messanordnung 20. Die Detektormodule 1 sind dazu ausgebildet, von einer Probenposition ausgehende Röntgenstrahlung zu detektieren; zur Vereinfachung ist hier die Probenposition nicht näher dargestellt (vgl. dazu aber Figs. 12 -14 hierzu).

Alle Detektormodule 1 sind hier bezüglich einer (vorgesehenen) Messrichtung MR einzeln aufeinanderfolgend angeordnet, d.h. jedes Detektormodul 1 ist bezüglich der Messrichtung MR an einem anderen Ort angeordnet (der Ort eines Detektormoduls 1 kann beispielsweise jeweils über die die Mitte 22 des Detektormoduls 1 definiert werden). Von oben nach unten in Fig. 4 sind die Detektormodule 1 bezüglich der Messrichtung MR in der Abfolge 1a, 1b, 1c, 1d, 1e, 1f usw. aufgereiht.

Alle Detektormodule 1 sind hier baugleich ausgebildet, jeweils mit einer Aktivzone 3, die in Messrichtung MR eine Länge L1 aufweist, und mit einer die Aktivzone 3 rahmenartig umgebenden Totzone 6. Die Detektormodule 1 weisen jeweils eine Länge LM im Messrichtung MR auf. Die Aktivzonen 3 enthalten jeweils gleich breite Sensorstreifen, die jeweils nur ein durchgehendes Sensorelement enthalten und quer zur Messrichtung MR ausgerichtet sind.

In der gezeigten Ausführungsform bilden die Detektormodule 1, 1a-1f dabei eine erste Reihe R1 und eine zweite Reihe R2 aus. Innerhalb der ersten Reihe R1 sind die Detektormodule 1b, 1d, 1f usw. ("erste Detektormodule" E) in Messrichtung MR hintereinander und an jeweils gleicher Position bezüglich der Querrichtung QR angeordnet. Innerhalb der zweiten Reihe R2 sind die Detektormodule 1a, 1c, 1e usw. ("zweite Detektormodule" Z) in Messrichtung MR hintereinander und an jeweils gleicher Position bezüglich der Querrichtung QR angeordnet. Die beiden Reihen R1, R2 liegen bezüglich der Querrichtung QR nebeneinander.

In der gezeigten Ausführungsform überlappen jeweils aufeinanderfolgende Detektormodule, etwa die Detektormodule 1a, 1b, in Überlappungsbereichen, etwa dem Überlappungsbereich 23a, bezüglich der Messrichtung MR. Mit anderen Worten, im Überlappungsbereich 23a findet sich auf allen Positionen bezüglich der Messrichtung MR sowohl ein Teil des Detektormoduls 1a als auch ein Teil des Detektormoduls 1b. Weitere Überlappungsbereiche 23b, 23c, 23d und 23e werden ausgebildet durch die Detektormodulpaare 1b/1c, 1c/1d, 1d/1e und 1e/1f. In der gezeigten Ausführungsform überlappen dabei die Aktivzonen 3 der Detektormodule 1 eines jeweiligen Überlappungsbereichs 23a-23e bezüglich der Messrichtung MR nicht, sondern die Aktivzonen 3 schließen bezüglich der Messrichtung MR unmittelbar aneinander an (auch wenn die aneinander anschließenden Aktivzonen 3 an unterschiedlichen Positionen in Querrichtung QR angeordnet sind, entsprechend den unterschiedlichen Positionen der Reihen R1, R2 in Querrichtung QR).

Die in einem Überlappungsbereich, etwa dem Überlappungsbereich 23a, in Messrichtung MR überlappenden Detektormodule, etwa die Detektormodule 1a, und 1b, überlappen nicht in Querrichtung, d.h. an jeder Position entlang der Querrichtung ist nur das Detektormodule 1a oder das Detektormodul 1b anzutreffen, nicht jedoch beide.

In der gezeigten Ausführungsform sind beide Reihen R1, R2 als abstandsbehaftete Reihen ausgebildet, bei denen die in Messrichtung MR aufeinanderfolgenden Detektormodule, etwa die Detektormodule 1a, 1c in der zweiten Reihe R2, bezüglich der Messrichtung MR einen Abstand AB aufweisen. Für den Abstand AB gilt hier ca. AB=0,42*LM.

Die Aktivzonen 3 der in einer jeweiligen Reihe R1, R2 aufeinanderfolgenden Detektormodule 1 haben in Messrichtung MR jeweils einen Abstand L2. Vorliegend gilt für den Abstand L2 hier L2=L1, da die Aktivzonen 3 sich in Messrichtung MR in den Überlappungsbereichen 23a-23e aneinander anschließen.

Die Gesamtheit der Aktivzonen 3 aller Detektormodule 1 des Röntgendetektors 21 besitzt in Messrichtung MR eine Ausdehnung AM, und in Querrichtung eine Ausdehnung AQ. Bei der gezeigten Ausführungsform gilt ca. AM=6,7*AQ. Mit diesem Aspektverhältnis ist die Messanordnung 20 gut für eine 1-dimensionale Röntgenmessung, etwa eine Pulverdiffraktometrie einer Messprobe, geeignet.

Während einer Röntgenmessung trifft Röntgenstrahlung ausgehend von einer Messprobe an der Probenposition (nicht dargestellt) auf den Röntgendetektor 21. Dabei leuchtet typischerweise Röntgenstrahlung, die dieselbe Information von der Messprobe enthält, die gesamte Ausdehnung AQ des Röntgendetektors gleichermaßen aus. Daher spielt es keine Rolle, ob eine Messinformation (bzw. Röntgenintensität) zu einer bestimmten (Mess-)Position entlang der Messrichtung MR durch ein Detektormodule 1b, 1d, 1f etc. der ersten Reihe R1 oder durch ein Detektormodul 1a, 1c, 1e der zweiten Reihe R2 vermessen wird. Durch die Abfolge der Detektormodule 1 entlang der Messrichtung MR mit unmittelbar aneinander anschließenden Aktivzonen 3 kann eine lückenlose Messinformation in Messrichtung über die gesamte Ausdehnung AM des Röntgendetektors 21 erhalten werden. An Positionen in Messrichtung MR, an denen in der ersten Reihe R1 eine Totzone 6 eines dortigen Detektormoduls 1b, 1d, 1f oder eine Lücke zwischen den Detektormodulen 1b, 1d, 1f liegt, kann mittels einer Aktivzone 3 eines Detektormoduls 1a, 1c, 1e der zweiten Reihe R2 die Messinformation gewonnen werden und umgekehrt.

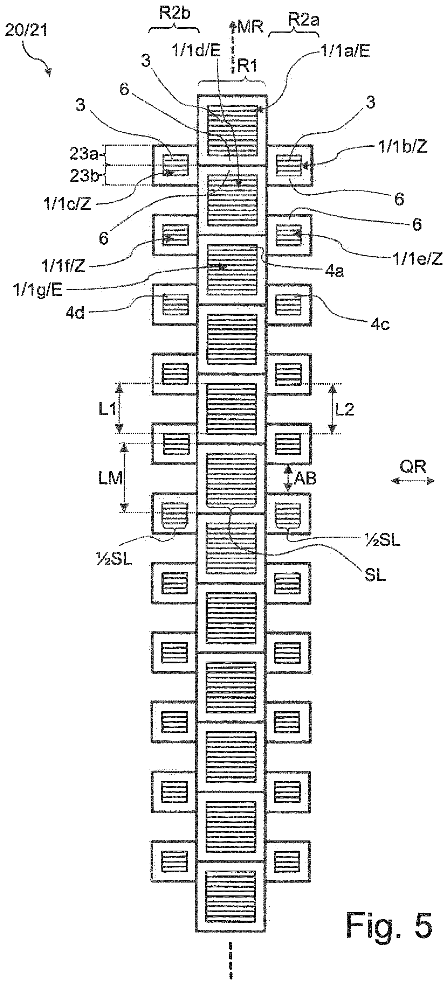

Die **Fig. 5** zeigt eine zweite Ausführungsform einer erfindungsgemäßen Messanordnung 20; es werden nur die wesentlichen Unterschiede zur Ausführungsform von Fig. 4 erläutert.

In der in Fig. 5 gezeigten Ausführungsform sind die Detektormodule 1 in drei Reihen angeordnet, nämlich einer mittigen, ersten Reihe R1 (mit Detektormodulen 1a, 1d, 1g, usw., "erste Detektormodule" E), und zwei zweiten Reihen R2a, R2b (mit Detektormodulen 1b, 1e und 1c, 1f, "zweite Detektormodule" Z). Die Detektormodule 1 sind hier in einer alternierenden Folge von einzelnen Detektormodulen 1 der ersten Reihe R1 und Zweiergruppen von Detektormodulen 1 aus den zweiten Reihen R2a, R2b bezüglich der Messrichtung MR aufeinanderfolgend angeordnet. Von oben nach unten in Fig. 5 sind die Detektormodule 1 bezüglich der Messrichtung MR in der Abfolge einzelnes Detektormodul 1a, Gruppe von Detektormodulen 1b, 1c, einzelnes Detektormodul 1d, Gruppe von Detektormodulen 1e, 1f, einzelnes Detektormodul 1g, usw. aufgereiht. Die Detektormodule 1a, 1d, 1g der ersten Reihe ("erste Detektormodule" E) sind hier größer ausgebildet als die Detektormodulen 1b, 1c, 1e, 1f der zweiten Reihen R2a, R2b ("zweite Detektormodule" Z).

Die erste Reihe R1 ist hier nicht als eine abstandsbehaftete Reihe ausgebildet, da die Detektormodule 1a, 1d, 1g der ersten Reihe R1 hier unmittelbar aneinander grenzen. Hingegen sind die zweiten Reihen R2a, R2b abstandsbehaftete Reihen, mit einem Abstand L2 zwischen aufeinander folgenden Aktivzonen 3 der Detektormodulen 1b, 1e in Messrichtung MR, und einem Abstand AB zwischen den aufeinander folgenden Detektormodulen 1b, 1e in Messrichtung MR.

Da die Aktivzonen 3 der Detektormodulen 1a, 1d, 1g der ersten Reihe R1 und die Aktivzonen 3 der Gruppen von Detektormodulen 1b/1c und 1e/1f in den zweiten Reihen R2a, R2b in Messrichtung MR unmittelbar aneinander anschließen (wenn auch bei in Querrichtung QR versetzter Position), gilt wiederum L2=L1, mit L1: Länge der Aktivzonen 3 der Detektormodulen 1a, 1d, 1g der ersten Reihe R1. Zudem gilt hier ca. AB=0,41*LM, mit LM: Länge der Detektormodulen 1a, 1d, 1g der ersten Reihe R1 in Messrichtung MR.

Bei dieser Ausführungsform überbrücken die Aktivzonen 3 der Gruppen von Detektormodulen 1b/1c und 1e/1f der zweiten Reihen R2a, R2b die Totzonen 6 der jeweils in der ersten Reihe R1 aufeinanderfolgenden Detektormodulen 1a, 1d, 1g. Umgekehrt überbrücken die Aktivzonen 3 der Detektormodulen 1a, 1d, 1g der ersten Reihe R1 die Totzonen 6 der Detektormodulen 1b, 1e und 1c, 1f und die Lücken zwischen den Detektormodulen 1b, 1e und 1c, 1f der zweiten Reihen R2a, R2b in Messrichtung MR. Entsprechend sind beispielsweise an der Gruppe 1b/1c von Detektormodulen der zweiten Reihen R2a, R2b die Überlappungsbereiche 23a (zum Detektormodul 1a der Reihe R1) und 23b (zum Detektormodul 1d der Reihe R1) ausgebildet, in denen die Detektormodule 1b/1c mit dem Detektormodul 1a (Überlappungsberiech 23a) und die Detektormodule 1b/1c mit dem Detektormodul 1d (im Überlappungsbereich 23b) in Messrichtung MR überlappen; es besteht aber wiederum keine Überlappung der Detektormodule (etwa 1a, 1b, 1c) eines Überlappungsbereichs (etwa 23a) in Querrichtung QR.

Die Sensorstreifen 4c, 4d der Detektormodule 1b, 1e, 1c, 1f in den zweiten Reihen R2a, R2b haben eine Breite (in Querrichtung QR), die jeweils halb so groß ist wie die Breite der Sensorstreifen 4a der Detektormodule 1a, 1d in der ersten Reihe. Da in den überbrückenden Gruppen 1b, 1c und 1e, 1f von Detektormodulen in den zweiten Reihen R2a, R2b jeweils zwei Sensorstreifen 4c, 4d die gleiche Position entlang der Messrichtung MR gleichzeitig auslesen, in den Detektormodulen 1a, 1d, 1g der ersten Reihe R1 aber jeweils nur ein Sensorstreifen 4a, ergibt sich in beiden Fällen jeweils die gleiche effektive, gesamte Sensorlänge SL und damit Integrationsfläche für Röntgenstrahlung. Entsprechend muss für die Intensitätsbestimmung von Röntgenstrahlen als Funktion der Zeit nur direkte Zählraten (aus Reihe R1) und summierte Zählraten (aus den Reihen R2a, R2b) für jede Position entlang der Messrichtung MR herangezogen werden, und insbesondere braucht keine Kalibrierung vorbenommen werden.

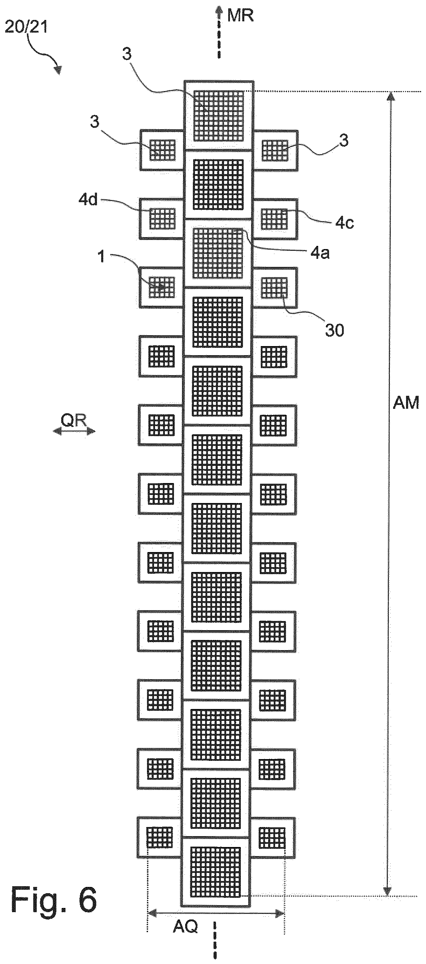

Die **Fig. 6** zeigt eine dritte Ausführungsform einer Messanordnung 20 ähnlich der in Fig. 5 gezeigten Messanordnung. Es werden wiederum nur die wesentlichen Unterschiede erläutert.

Bei dieser Ausführungsform sind die Sensorstreifen 4a, 4c, 4d der Detektormodule 1 (die sich jeweils in Querrichtung QR erstrecken) jeweils nochmals in Querrichtung QR in pixelförmige Sensorelemente 30 unterteilt. Dadurch kann nicht nur eine ortsaufgelöste Intensitätsbestimmung von Röntgenstrahlung entlang der Messrichtung MR, sondern auch entlang der Querrichtung QR erfolgen. Allerdings ist der in Querrichtung QR ortsaufgelöste Bereich relativ klein, vgl. die Ausdehnungen AM und AQ, mit hier ca. AM=5,8*AQ. Typischerweise wird die Unterteilung in Querrichtung QR dazu genutzt, eine effektive Breite der Gesamtheit der Aktivzonen 3 in Querrichtung QR, innerhalb derer detektierte Röntgenstrahlung ausgewertet wird, zu verkleinern ("virtuelle Maske"), um den Einfluss von Streustrahlung zu verringern oder auch um einen Scan des Röntgendetektors 21 entlang der Querrichtung QR mit größerer örtlicher Schärfe durchführen zu können.

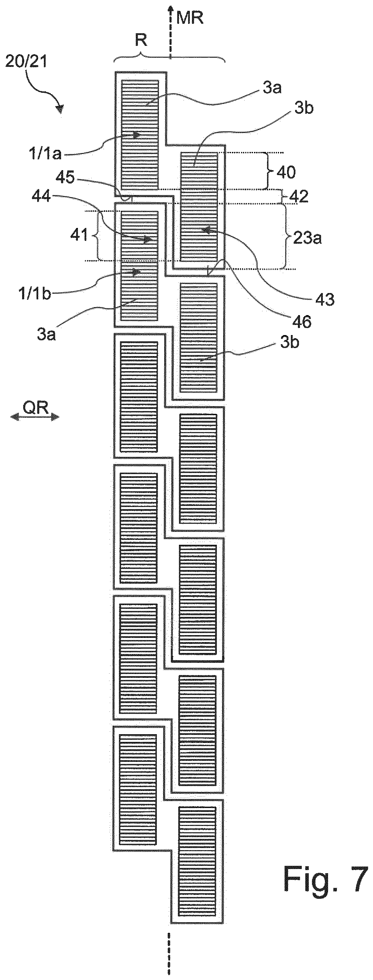

**Fig.** 7 zeigt eine vierte Ausführungsform einer erfindungsgemäßen Messanordnung 20, ähnlich der in Fig. 4 gezeigten Messanordnung. Es werden wiederum die wesentlichen Unterschiede erläutert.

Bei dieser Ausführungsform sind die Detektormodule 1 in nur einer Reihe R in Messrichtung MR aufeinander folgend angeordnet; alle Detektormodule 1 sind gleich ausgebildet und (in der Reihe R) gleich orientiert.

Zur Einrichtung der Überlappungsbereiche 23a sind die Detektormodule 1 verzahnt angeordnet, d.h. ein Vorsprung 43, 44 (bezüglich der Messrichtung MR) eines jeweiligen Detektormoduls 1 greift in einen Rücksprung 45, 46 (bezüglich der Messrichtung MR) des jeweils anderen Detektormoduls 1 ein und umgekehrt (vgl. Detektormodule 1a, 1b). Die Detektormodule 1 sind dafür S-artig ausgebildet. Im Überlappungsbereich 23a liegen jeweils die Vorsprünge 43, 44 der in Messrichtung MR aufeinander folgenden Detektormodule 1 in Querrichtung QR nebeneinander.

Jedes Detektormodul 1 umfasst hier zwei aktive Zonen 3a, 3b, die hier in Messrichtung MR in einem Mittelbereich 40 überlappen. In Messrichtung MR aufeinander folgende Detektormodule 1a, 1b bilden jeweils einen Überlappungsbereich 23a aus, in welchem die Detektormodule 1a, 1b in Messrichtung MR überlappen. Hierbei überlappen auch die Aktivzonen (3b von Detektormodul 1a und 3a von Detektormodul 1b) der verschiedenen Detektormodule 1a, 1b in Messrichtung, so dass sich Doppelmessbereiche 41 in den Überlappungsbereichen 23a ausbilden.

Man beachte, dass hier die überlappenden Detektormodule 1a, 1b eines Überlappungsbereichs 23a auch in Querrichtung QR überlappen, d.h. an einer bestimmten Position entlang der Querrichtung QR ist sowohl das Detektormodul 1a als auch das Detektormodul 1b zu finden (wenn auch jeweils eines davon außerhalb des Überlappungsbereichs 23a, bezogen auf eine bestimmte Position in Querrichtung QR).

Bezüglich der Doppelmessbereiche 41 und der Mittelbereiche 40, in denen die Röntgenintensität doppelt bestimmt wird, ist eine Kalibrierung gegenüber den einfach vermessenen Positionen in Zwischenbereichen 42 nötig, um eine unverzerrte, bezüglich der Messrichtung MR ortsausgelöste Röntgenintensitätsmessung zu erhalten.

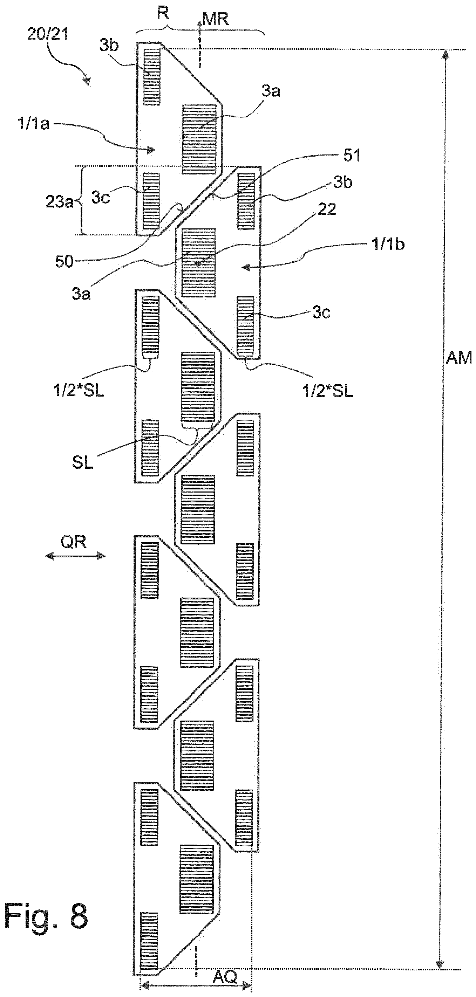

In der in **Fig. 8** gezeigten fünften Ausführungsform einer erfindungsgemäßen Messanordnung, die wiederum der Ausführungsform von Fig. 7 ähnelt, so dass nur die wichtigsten Unterschiede erläutert werden, sind

Bei dieser Bauform sind die Detektormodule 1 alle baugleich ausgeführt, jeweils mit einer großen Aktivzone 3a (Haupt-Aktivzone) und zwei kleinen Aktivzonen (Neben-Aktivzonen, mit halber Breite der Sensorstreifen in Querrichtung QR, aber gleicher Länge in Messrichtung MR) 3b, 3c, wobei die Aktivzonen 3a, 3b, 3c eines Detektormoduls 1 in Messrichtung MR aneinander anschließen, aber bezüglich der Querrichtung QR zueinander versetzt sind. Die Detektormodule 1 sind im Wesentlichen trapezförmig ausgebildet. Der Ort eines jeweiligen Detektormoduls 1 kann beispielsweise jeweils durch die Mitte 22 der großen Aktivzone 3a beschrieben werden. Die Detektormodule 1 sind in Messrichtung MR aufeinanderfolgend angeordnet, jeweils mit den Mitten 22 der aufeinanderfolgenden Detektormodule 1 untereinander, so dass die Detektormodule 1 diesbezüglich in einer einzigen Reihe R hintereinander angeordnet sind; allerdings alterniert die Orientierung der Detektormodule 1 zwischen aufeinanderfolgenden Detektormodulen 1a, 1b, so dass die kleinen Aktivzonen 3b, 3c jeweils zu unterschiedlichen Seiten (links bzw. rechts in Fig. 8) hin positioniert sind. Die aufeinanderfolgenden Detektormodule 1a, 1b sind mit keilförmigen Kanten 50, 51 einander zugewandt (Man beachte, dass bei anderer Definition des Ortes der Detektormodule 1, etwa jeweils am Flächenschwerpunkt der jeweiligen Detektormodule, die in Fig. 8 gezeigte Ausführungsform auch als umfassend zwei Reihen aufgefasst werden könnte).

Der Versatz der aufeinanderfolgenden Detektormodule 1a, 1b in Messrichtung MR ist so bestimmt, dass in einem jeweiligen Überlappungsbereich 23a die Aktivzonen 3c (des oberen Detektormoduls 1a) und 3b (des unteren Detektormoduls 1b) in Messrichtung genau überlappen. Dadurch wird erreicht, dass an jeder Position entlang der Messrichtung MR insgesamt die gleiche effektive, gesamte Streifenlänge SL in Querrichtung bzw. an Sensorfläche zur Verfügung steht.

Für die Ausdehnung der Gesamtheit aller Detektormodule 1 des Röntgendetektors 21 in Messrichtung MR, vgl. Ausdehnung AM, und in Querrichtung QR, vgl. AQ, gilt hier ca. AM=8,3*AQ.

Man beachte, dass hier die überlappenden Detektormodule 1a, 1b eines Überlappungsbereichs 23a wiederum auch in Querrichtung QR überlappen, d.h. an einer bestimmten Position entlang der Querrichtung QR ist sowohl das Detektormodul 1a als auch das Detektormodul 1b zu finden (teilweise mit beiden Detektormodulen 1a, 1b im Überlappungsbereich 23a, bezogen auf eine bestimmte Position in Querrichtung QR). Im Überlappungsbereich 23a liegen jeweils untere und obere Teile der überlappenden Detektormodule 1a, 1b in Querrichtung QR nebeneinander.

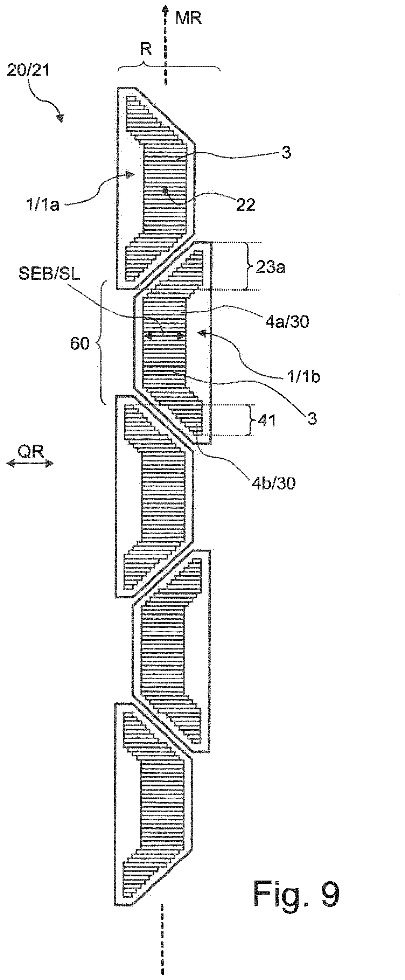

Die in **Fig. 9** dargestellte sechste Ausführungsform einer erfindungsgemäßen Messanordnung 20 ist ähnlich der Ausführungsform von Fig. 8 ausgebildet, so dass nur die wesentlichen Unterschiede erläutert werden.

Die im Wesentlichen trapezförmigen Detektormodule 1 sind wiederum in einer Reihe R hintereinander angeordnet, wobei die Orientierung der Detektormodule 1 zwischen aufeinanderfolgenden Detektormodulen 1a, 1b alterniert. Jedes Detektormodul 1 weist eine Aktivzone 3 mit Sensorstreifen 4a, 4b auf, wobei die Sensorstreifen 4a in einem mittleren Bereich 60 eine einheitliche Sensorelementbreite SEB aufweisen; die Sensorstreifen 4a, 4b enthalten jeweils nur ein durchgehendes Sensorelement 30. Der Ort eines Detektormoduls 1 kann über die Mitte 22 eines jeweiligen mittleren Bereichs 60 (hier unter Vernachlässigung der am oberen und unteren Rand in Querrichtung bereits leicht versetzten Sensorstreifen 4a) definiert werden. (Man beachte, dass bei anderer Definition des Ortes der Detektormodule 1, etwa jeweils am Flächenschwerpunkt der jeweiligen Detektormodule, die in Fig. 9 gezeigte Ausführungsform auch als umfassend zwei Reihen aufgefasst werden könnte).

Die jeweils aufeinanderfolgenden Detektormodule 1a, 1b überlappen in Messrichtung MR in Überlappungsbereichen 23a, wobei auch die Aktivzonen 3 in Doppelmessbereichen 41 überlappen. In den Doppelmessbereichen 41 sind jedoch die lokalen Sensorelementbreiten der Sensorstreifen 4b der Aktivzonen 3 verkürzt, wobei sich an einer jeweiligen Position entlang der Messrichtung MR in Summe der Sensorelementbreiten der Sensorstreifen 4b der beiden Aktivzonen 3 der Detektormodule 1a, 1b jeweils eine summierte effektive Streifenlänge SL in Querrichtung QR ergibt, wobei SL gleich ist der einheitlichen Sensorelementbreite SEB der einzelnen Sensorstreifen 4a im mittleren Bereich 60.

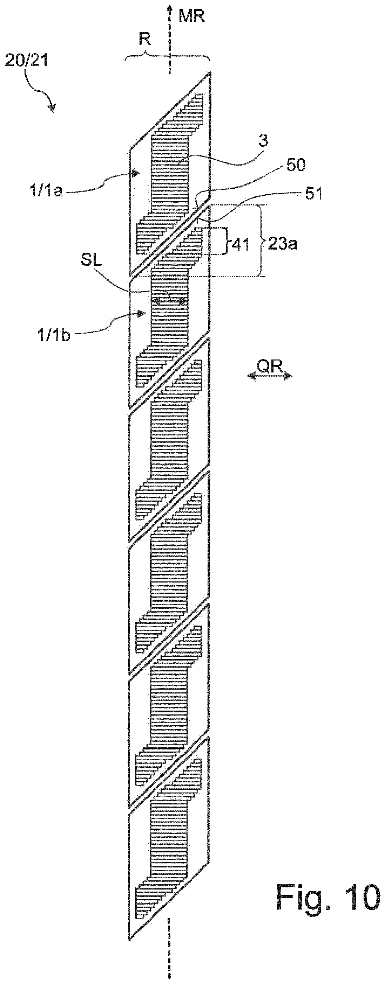

Eine siebte Ausführungsform einer erfindungsgemäßen Messanordnung 20 ist in **Fig. 10** dargestellt. Es werden nur die wesentlichen Unterschiede zur Ausführungsform von Fig. 9 erläutert.

Die Detektormodule 1 sind hier wiederum in einer Reihe hintereinander angeordnet. Im Bereich von keilförmigen Kanten 50, 51 sind Überlappungsbereiche 23a jeweils benachbarter Detektormodule 1a, 1b eingerichtet. Dabei überlappen wiederum auch die Aktivzonen 3 der Detektormodule 1a, 1b in Doppelmessbereichen 41. In den Doppelmessbereichen 41 sind wiederum die Sensorstreifen 4b verkürzt ausgebildet, wobei die summierten, effektiven Streifenlängen SL in Querrichtung QR überall gleich sind.

Bei dieser Ausführungsform sind alle Detektormodule 1 identisch ausgebildet und in der Abfolge der Detektormodule 1 in der Reihe R gleich orientiert. Die Detektormodule 1 sind jeweils Parallelogramm-artig ausgebildet.

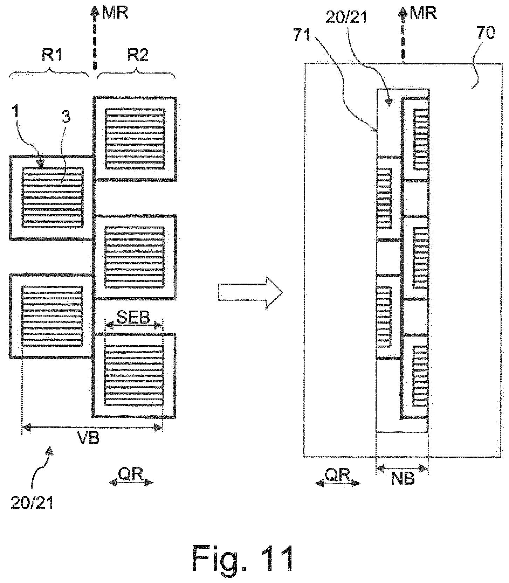

Die **Fig. 11** zeigt einen Ausschnitt aus einer erfindungsgemäßen Messanordnung 20 wie in Fig. 4 dargestellt, die mit einer Maske 70 abgedeckt wird. Links ist die Messanordnung 20 allein, und rechts die Messanordnung 20 mit davor positionierter Maske 70 gezeigt. Die Maske 70 ist aus einem für Röntgenstrahlung schlecht durchlässigen Material, etwa Blei, gefertigt.

Die Gesamtheit der Aktivbereiche 3 der Detektormodule 1 in beiden Reihen R1, R2 weist eine volle Breite VB in Querrichtung QR auf. Durch Anordnung der Maske 70 vor den Röntgendetektor 21 wird die volle Breite VB der Gesamtheit der Aktivbereiche 3 auf eine kleinere, dann noch nutzbare Breite NB in Querrichtung QR beschränkt. Im gezeigten Ausführungsbeispiel verbleibt von der jeweiligen Sensorelementbreite SEB (bzw. Streifenlänge) in Querrichtung QR nur ca. ¼ unabgeschattet. Die Maske 70 wird so positioniert, dass von beiden Reihen R1, R2 (bzw. den in den Überlappungsbereichen bezüglich der Messrichtung MR überlappenden Detektormodulen 1) gleichermaßen Anteile der Aktivzonen 3 unabgeschattet bleiben, also auch mit Maske 70 eine bezüglich der Messrichtung MR lückenlose Röntgenmessung erfolgen kann.

Durch die Maske 70 kann bei Bedarf eine ortsgenauere Röntgenbeugungsmessung bezüglich der Querrichtung QR erfolgen, etwa wenn der Röntgendetektor 21 während der Messung geschwenkt/gedreht wird (beispielsweise um mechanische Spannungen oder Vorzugsrichtungen/Texturen in der Messprobe zu bestimmen).

Die **Fig. 12** zeigt einen Messaufbau 90 für die Erfindung, umfassend eine erfindungsgemäße Messanordnung 20, ähnlich wie in Fig. 9 dargestellt.

Von einer Röntgenquelle 94 wird ein Röntgenstrahl 95 auf eine Probenposition 91 gerichtet, an der eine Messprobe 96 angeordnet ist. Die Messprobe 96 wechselwirkt mit der Röntgenstrahlung, insbesondere durch Beugung an den Gitterstrukturen im Material der Messprobe 96. Die Messprobe 96 ist beispielsweise pulverförmig, so dass von der Messprobe gebeugte Strahlung in so genannten Debye-Kegeln ausgeht, mit der Achse der Debye-Kegel entsprechend der Ausbreitungsrichtung des Röntgenstrahls 95. Mögliche Schnittringe von Debye-Kegeln um eine Kugel um die Probenposition 91, hier mit einem Radius entsprechend dem Kreisbogen 92, sind gepunktet angedeutet ("Debye-Ringe").

Auf einem Kreisbogen 92 um die Probenposition 91 sind die Detektormodule 1 eines Röntgendetektors 21 angeordnet. Die Detektormodule 1 sind entlang des Kreisbogens 92, der gleichzeitig die (lokale) Messrichtung MR an jedem Detektormodul 1 definiert, überlappend angeordnet (wie oben beschrieben). Die einzelnen Detektormodule 1 sind jeweils auf einem ebenen Substrat 2 ausgebildet, das senkrecht zur lokalen Verbindungsrichtung VR zur Probenposition 91 orientiert ist (beispielhaft eingezeichnet für Detektormodul 1a). Die lokale Verbindungsrichtung VR verläuft von der Probenposition 91 zum jeweiligen Substrat 2 bzw. zum Detektormodul 1 (bzw. dessen Mitte). Am jeweiligen Detektormodul 1 sind die Messrichtung MR, die Querrichtung QR und die Verbindungsrichtung VR näherungsweise senkrecht zueinander.

Falls der Röntgenstrahl 95 mit einem Linienfokus erzeugt ist, sollte die lange Richtung des Röntgenstrahls parallel zur Querrichtung QR und die kurze Richtung senkrecht dazu (also hier in vertikaler Richtung) liegen, um die dem ausgedehnten Röntgenstrahl implizite Redundanz der Messinformation entlang der Querrichtung einzurichten.

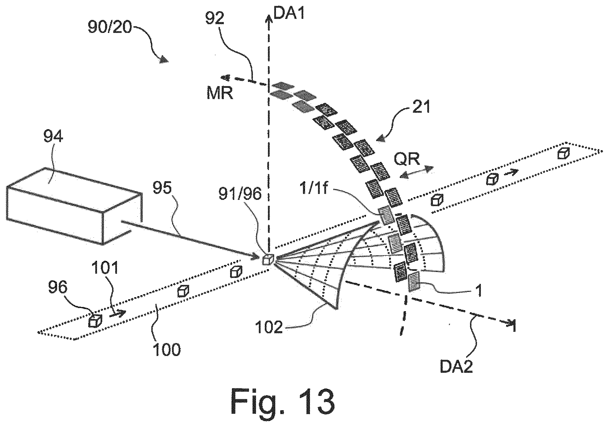

Die **Fig. 13** illustriert eine mögliche Anwendung eines Messaufbaus 90, ähnlich wie in Fig. 12 gezeigt.

Auf einem Förderband 100 laufen verschiedene Messproben 96 entlang einer Förderrichtung 101 auf die Probenposition 91 zu; an der Probenposition 91 ist hier gerade auch eine Messprobe 96 angekommen. Der Röntgenstrahl 95 bestrahlt für eine kurze Zeit (entsprechend der Geschwindigkeit des Förderbands 100) die Messprobe 96 an der Probenposition 91, und zu der Messprobe 96 gehörende gebeugte Röntgenstrahlung wird am Röntgendetektor 21 der Messanordnung 20 registriert. Beispielsweise wird gebeugte Röntgenstrahlung des Debye-Kegels 102 am Detektormodul 1f gemessen.

Es wird über den gesamten, von den in Messrichtung MR überlappenden Detektormodulen 1 abgedeckten Abschnitt des Kreisbogens 92 eine lückenlose, eindimensionale Beugungsinformation von der Messprobe 96 erhalten; alle Detektormodule 1 messen dabei gleichzeitig. Insbesondere ist es nicht nötig, den Röntgendetektor 21 für den Erhalt einer lückenlosen Beugungsinformation zu verfahren.

Dadurch ist die Messung schnell genug, um auch eine kontinuierliche Qualitätskontrolle von durchlaufenden Messproben 96 bereitzustellen ("online-Qualitätskontrolle"). Beispielsweise können über die Beugungsinformation kristalline Verunreinigungen in einer Messprobe 96 auf einfache und schnelle Weise erkannt werden, etwa um diese bei Vorliegen einer Verunreinigung aus einem Produktionsprozess auszusortieren.

Bei dem in Fig. 13 gezeigten Messaufbau 90 sind die Röntgenquelle 94 und der Röntgendetektor 21 (einschließlich der Probenposition 91) ortsfest angeordnet, was besonders einfach einzurichten ist. Alternativ ist es auch möglich, den Röntgendetektor 21 um eine Drehachse DA1, die senkrecht zur Strahlrichtung des Röntgenstrahls 95 verläuft, schwenkbar einzurichten, um zusätzliche Beugungsinformationen zu gewinnen. Ebenso ist es alternativ möglich, den Röntgendetektor 21 um eine Drehachse DA2, die entlang der Strahlrichtung des Röntgenstrahls 95 verlauft, schwenkbar einzurichten, um zusätzliche Beugungsinformationen zu gewinnen. Insbesondere können durch die Schwenkbarkeit um eine Drehachse DA1 oder DA2 Stressmessungen oder auch Texturmessungen an der Messprobe 96 erfolgen. Wenn der Röntgendetektor 21 während der Messung gedreht wird, ist ein Röntgenstrahl 95 mit einem Punktfokus bevorzugt, ggf. wobei auch eine Maske eingesetzt werden kann.

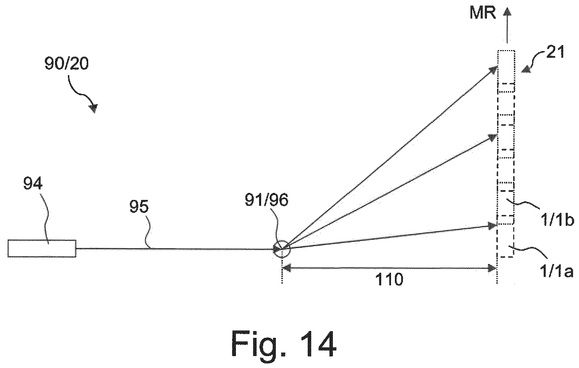

Die **Fig. 14** zeigt in schematischer Seitenansicht einen dritten Messaufbau 90 zur allgemeinen Erläuterung, umfassend eine Messanordnung 20 ähnlich wie in Fig. 4 dargestellt. Die Messanordnung 20 umfasst dabei einen Röntgendetektor 21 mit mehreren Detektormodulen 1, die in zwei Reihen bezüglich der Messrichtung MR überlappend angeordnet sind (wie oben beschrieben); Detektormodule 1a der ersten Reihe sind dabei gestrichelt dargestellt, und Detektormodule 1b der zweiten Reihe sind dabei gepunktet dargestellt. Die erste und zweite Reihe liegen dabei bezüglich der Querrichtung (die hier senkrecht zur Zeichenebene verläuft) hintereinander. Die Detektormodule 1 registrieren gebeugte Röntgenstrahlung von einer Messprobe 96 an der Probenposition 91, die von einem Röntgenstrahl 95 aus einer Röntgenquelle 94 beleuchtet wird.

Die Messrichtung MR, entlang derer die Detektormodule 1 aufeinanderfolgend angeordnet sind und entlang derer der Röntgendetektor eine Ortsauflösung bereitstellt, verläuft hier entlang einer Geraden, die in der gezeigten Bauform vertikal orientiert ist. Diese Bauform ist besonders einfach, und gestattet eine flexible Veränderung des Abstands 110 zwischen Probenposition 91 bzw. Messprobe 96 und dem Röntgendetektor 21 (gemessen hier entlang der Ausbreitungsrichtung des Röntgenstrahls 95). Man beachte, dass die Querrichtung (verlaufend senkrecht zur Zeichenebene) an jedem Detektormodul 1 zwar senkrecht zur lokalen Messrichtung MR und senkrecht zur lokalen Verbindungsrichtung zur Probenposition verläuft; jedoch verläuft die lokale Messrichtung MR mit teilweise erheblichen Abweichungen zum einem 90°-Winkel gegenüber der lokalen Verbindungsrichtung zur Probenposition 91.

Allgemein (bei gerader Messrichtung oder auch gekrümmter/kreisbogenförmiger Messrichtung) gilt, dass ein typischer Abstand 110 zwischen Probenposition 96 und Röntgendetektor 21 bei 150-300 mm liegt. Typische Ausdehnungen AQ der Gesamtheit der Aktivzonen in Querrichtung liegen bei 5-20 mm. Die Energie der eingesetzten Röntgenstrahlung ist meist um 4-30 keV, für spezielle Anwendungen auch bis 60 keV oder sogar bis 150 keV. Detektormodule werden im Rahmen der Erfindung in Messrichtung aufeinanderfolgend und in Querrichtung nebeneinander angeordnet, und insbesondere nicht bezüglich der Verbindungsrichtung zur Probenposition hintereinander.

Zusammenfassend schlägt die vorliegende Erfindung vor, einen Röntgendetektor (21) mit einer Vielzahl von Detektormodulen (1, 1a-1g) auszubilden, die jeweils Totzonen (6) ohne Röntgensensitivität und Aktivzonen (3, 3a-3c) mit in einer Messrichtung (MR) ortsaufgelösten Röntgensensitivität umfassen, wobei die Detektormodule (1, 1a-1g) entlang der Messrichtung (MR) aufeinanderfolgend und überlappend ausgebildet sind, so dass in Überlappungsbereichen (23a-23e) die Totzone (6) eines Detektormoduls (1, 1a-1g) von einer Aktivzone (3, 3a-3c) eines anderen Detektormoduls (1, 1a-1g) überbrückt wird. Die überlappenden Detektormodule (1, 1a-1g) sind in den Überlappungsbereichen (23a-23e) in Querrichtung (QR) nebeneinander angeordnet, wobei die Querrichtung (QR) quer zur lokalen Messrichtung (MR) und quer zu einer lokalen Verbindungsrichtung (VR) zu einer Probenposition (91) verläuft. Mit dem Röntgendetektor (21) lässt sich auf einfache Weise eine lückenlose, eindimensionale Messinformation, nämlich eine Röntgenbeugungsinformation, von einer Messprobe (96) an der Probenposition (91) gewinnen.

### Bezugszeichenliste

- 1: Detektormodul
- 1a-1g: Detektormodul
- 2: Substrat
- 3: Aktivzone
- 3a-3c: Aktivzone
- 4a-4d: Sensorstreifen
- 5: Längsseite (Sensorstreifen)
- 6: Totzone
- 7a-7b: Messkanal
- 8a-8b: Ladungsimpuls
- 9: Auswerteelektronik
- 10: Fenster
- 11a-11b: Elektrode
- 12a-12b: Messkanal
- 20: Messanordnung
- 21: Röntgendetektor
- 22: Mitte
- 23a-23e: Überlappungsbereich
- 30: Sensorelement
- 40: Mittelbereich
- 41: Doppelmessbereich
- 42: Zwischenbereich
- 43: Vorsprung
- 44: Vorsprung
- 45: Rücksprung
- 46: Rücksprung
- 50: keilförmige Kante
- 51: keilförmige Kante
- 60: mittlerer Bereich
- 70: Maske
- 71: Schlitz
- 90: Messaufbau
- 91: Probenposition
- 92: Kreisbogen um Probenposition
- 94: Röntgenquelle
- 95: Röntgenstrahl
- 96: Messprobe
- 100: Förderband
- 101: Förderrichtung
- 102: Debye-Kegel
- 110: Abstand Probenposition zu Röntgendetektor
- AB: Abstand aufeinanderfolgender Detektormodule
- AM: Ausdehnung Gesamtheit der Aktivzonen aller Detektormodule in Messrichtung
- AQ: Ausdehnung Gesamtheit der Aktivzonen aller Detektormodule in Querrichtung
- Ba, Bb, Bc: Schlitzbreite in Querrichtung
- E: erste Detektormodule
- LM: Länge Detektormodul der ersten Reihe
- L1: Länge Aktivzone eines Detektormoduls der ersten Reihe
- L2: Abstand Aktivzonen aufeinanderfolgender Detektormodule der zweiten Reihe
- MR: Messrichtung
- NB: nutzbare Breite
- QR: Querrichtung
- R: (einzige) Reihe
- R1: erste Reihe
- R2: zweite Reihe
- R2a, R2b: zweite Reihen
- SEB: Breite eines Sensorelements in Querrichtung
- SEH: Höhe eines Sensorelements in Messrichtung
- SL: Streifenlänge in Querrichtung
- VB: volle Breite
- VR: Verbindungsrichtung zur Probenposition
- Z: zweite Detektormodule

## Patentansprüche

1. Messanordnung (20) für Röntgenbeugung, umfassend
- eine mit einem Röntgenstrahl (95) beleuchtbare Probenposition (91) und
- einen Röntgendetektor (21) zur Detektion von der von der Probenposition (91) ausgehenden Röntgenstrahlung, umfassend mehrere Detektormodule (1, 1a-1g),
wobei die Detektormodule (1, 1a-1g) jeweils wenigstens eine Aktivzone (3, 3a-3c), in der Röntgenstrahlung detektiert werden kann, und eine Totzone (6), in der keine Röntgenstrahlung detektiert werden kann und die die wenigstens eine Aktivzone (3, 3a-3c) umschließt, aufweisen,
wobei die Detektormodule (1, 1a-1g) bezüglich einer Messrichtung (MR) einzeln und/oder in Gruppen aufeinanderfolgend angeordnet sind,
wobei die Aktivzonen (3, 3a-3c) der Detektormodule (1, 1a-1g) jeweils für eine in Messrichtung (MR) ortsaufgelöste Detektion der Röntgenstrahlung ausgebildet sind,
wobei die Gesamtheit der Aktivzonen (3, 3a-3c) aller Detektormodule (1, 1a-1g) des Röntgendetektors (21) in Messrichtung (MR) eine Ausdehnung AM und in einer Querrichtung (QR) eine Ausdehnung AQ besitzt, mit AM≥5*AQ, wobei die Querrichtung (QR) lokal quer zur Messrichtung (MR) und lokal quer zu einer Verbindungsrichtung (VR) zur Probenposition (91) verläuft,
wobei zumindest ein Teil der bezüglich der Messrichtung (MR) aufeinanderfolgenden Detektormodule (1, 1a-1g) Überlappungsbereiche (23a-23e) ausbildet, in denen jeweils wenigstens zwei Detektormodule (1, 1a-1g) in Messrichtung (MR) überlappen und in Querrichtung (QR) nebeneinander angeordnet sind,
wobei die Aktivzonen (3, 3a-3c) der Detektormodule (1, 1a-1g) in den Überlappungsbereichen (23a-23e) sich in Messrichtung (MR) unmittelbar aneinander anschließen oder in Messrichtung (MR) überlappen, so dass die Gesamtheit der Aktivzonen (3, 3a-3c) der Detektormodule (1, 1a-1g) eine in Messrichtung (MR) lückenlose Vermessung von der von der Probenposition (91) ausgehenden Röntgenstrahlung ermöglicht,
und wobei die Detektormodule (1) entlang eines Kreisbogens (92) um die Probenposition (91) überlappend angeordnet sind, wobei der Kreisbogen (92) die lokale Messrichtung (MR) an jedem Detektormodul (1) definiert, und die Detektormodule (1, 1a-1g) jeweils auf einem ebenen Substrat (2) ausgebildet sind, das senkrecht zur lokalen Verbindungsrichtung (VR) zur Probenposition (96) orientiert ist, und wobei am jeweiligen Detektormodul (1) die Messrichtung (MR), die Querrichtung (QR) und die Verbindungsrichtung (VR) näherungsweise senkrecht zueinander sind.

2. Messanordnung (20) nach Anspruch 1, **dadurch gekennzeichnet,**
**dass** die Detektormodule (1, 1a-1g) erste Detektormodule (E) und zweite Detektormodule (Z) umfassen,
wobei die ersten Detektormodule (E) in einer ersten Reihe (R1) in der Messrichtung (MR) hintereinander angeordnet sind, und die zweiten Detektormodule (Z) in zumindest einer zweiten Reihe (R2; R2a, R2b) in der Messrichtung (MR) hintereinander angeordnet sind,
**dass** die erste Reihe (R1) und die zumindest eine zweite Reihe (R2; R2a, R2b) bezüglich der Querrichtung (QR) nebeneinander angeordnet sind, und dass die ersten Detektormodule (E) gegenüber den zweiten Detektormodulen (Z) in Messrichtung (MR) gegeneinander versetzt angeordnet sind, so dass die Aktivzonen (3, 3a-3c) der zweiten Detektormodule (Z) Totzonen (6) der ersten Detektormodule (E), die in Messrichtung (MR) nicht von Aktivzonen (3, 3a-3c) der ersten Detektormodule (E) überlappt werden, in Messrichtung (MR) überlappen.

3. Messanordnung (20) nach Anspruch 2, **dadurch gekennzeichnet, dass** für eine erste Länge L1 in Messrichtung (MR), über die sich die Aktivzone (3, 3a-3c) oder Aktivzonen (3, 3a-3c) eines ersten Detektormoduls (1, 1a-1g) erstrecken, und für eine zweite Länge L2 in Messrichtung (MR), die zwischen den Aktivzonen (3, 3a-3c) von in der wenigstens einen zweiten Reihe (R2; R2a, R2b) in Messrichtung (MR) aufeinander folgenden zweiten Detektormodulen (1, 1a-1g) liegt, die beide einen Überlappungsbereich (23a-23e) mit dem ersten Detektormodul (E) ausbilden, jeweils gilt: L2 ≥ 0,2*L1, bevorzugt L2 ≥ 0,4*L1.

4. Messanordnung (20) nach einem der Ansprüche 2 oder 3, **dadurch gekennzeichnet, dass** die erste Reihe (R1) und die wenigstens eine zweite Reihe (R2; R2a, R2b) wenigstens eine abstandbehaftete Reihe umfassen, in der die in Messrichtung (MR) aufeinanderfolgenden Detektormodule (1, 1a-1g) bezüglich der Messrichtung (MR) mit einem Abstand AB voneinander beabstandet angeordnet sind,
insbesondere wobei gilt AB≥0,3*LM, mit LM: Länge der Detektormodule (1, 1a-1g) in der abstandsbehafteten Reihe in Messrichtung (MR).

5. Messanordnung (20) nach Anspruch 1, **dadurch gekennzeichnet, dass** die Detektormodule (1, 1a-1g) in lediglich einer Reihe (R) in der Messrichtung (MR) hintereinander angeordnet sind, wobei in den Überlappungsbereichen (23a-23e) die Detektormodule (1, 1a-1g) auch in der Querrichtung (QR) überlappen.

6. Messanordnung (20) nach einem der vorhergehenden Ansprüche, **dadurch gekennzeichnet, dass** die Detektormodule (1, 1a-1g) in den Überlappungsbereichen (23a-23b) näherungsweise keilförmig und/oder verzahnt ausgebildet sind.

7. Messanordnung (20) nach einem der Ansprüche 1 bis 6, **dadurch gekennzeichnet, dass** in den Überlappungsbereichen (23a-23e) die Aktivzonen (3; 3-3c) der überlappenden Detektormodule (1, 1a-1g) in Messrichtung (MR) in Doppelmessbereichen (41) überlappen.

8. Messanordnung (20) nach Anspruch 7, **dadurch gekennzeichnet, dass** die Aktivzonen (3, 3a-3c) der Detektormodule (1, 1a-1g) in den Doppelmessbereichen (41) bezüglich der Querrichtung (QR) verkürzt ausgebildet sind im Vergleich zu außerhalb der Doppelmessbereiche (41).

9. Messanordnung (20) nach einem der Ansprüche 1 bis 6, **dadurch gekennzeichnet, dass** in den Überlappungsbereichen (23a-23e) die Aktivzonen (3, 3a-3c) der überlappenden Detektormodule (1, 1a-1g) in Messrichtung (MR) nicht überlappen.

10. Messanordnung (20) nach einem der vorhergehenden Ansprüche, **dadurch gekennzeichnet, dass** die wenigstens eine Aktivzone (3, 3a-3c) eines jeweiligen Detektormoduls (1, 1a-1g) mehrere in Messrichtung (MR) aufeinanderfolgende Sensorstreifen (4a-4d) aufweist, die sich zumindest im Wesentlichen in Querrichtung (QR) erstrecken.

11. Messanordnung (20) nach Anspruch 10, **dadurch gekennzeichnet, dass** an allen Positionen entlang der Messrichtung (MR) eine summierte effektive Streifenlänge (SL) in Querrichtung (QR) der Sensorstreifen (4a-4d) aller Detektormodule (1, 1a-1g), die an der jeweiligen Position einen Sensorstreifen (4a-4d) ausbilden, gleich ist.

12. Messanordnung (20) nach Anspruch 10 oder 11, **dadurch gekennzeichnet, dass** zumindest ein Teil der Sensorstreifen (4a-4d), bevorzugt jeder Sensorstreifen (4a-4d), wenigstens ein Sensorelement (30) aufweist, das ein Sensorelement-Aspektverhältnis SEAV ≥ 3 aufweist, wobei SEAV = SEB/SEH und SEB: Breite des Sensorelements (30) in Querrichtung (QR), und SEH: Höhe des Sensorelements (30) in Messrichtung (MR).

13. Messanordnung (20) nach einem der Ansprüche 10 bis 12, **dadurch gekennzeichnet, dass** die Sensorstreifen (4a-4d) näherungsweise rechteckförmig ausgebildet sind, wobei die Längsseiten (5) der Sensorstreifen (4a-4d) sich in Querrichtung (QR) erstrecken, und wobei in Messrichtung (MR) aufeinanderfolgende Sensorstreifen (4a-4d) einer jeweiligen Aktivzone (3, 3a-3c) mit ihren Längsseiten (5) aneinander anliegen.

14. Messanordnung (20) nach einem der vorhergehenden Ansprüche, **dadurch gekennzeichnet,**
**dass** in den Überlappungsbereichen (23a-23e) die Aktivzonen (3; 3-3c) der überlappenden Detektormodule (1, 1a-1g) in Messrichtung (MR) in Doppelmessbereichen (41) überlappen,
**dass** die Aktivzonen (3, 3a-3c) der Detektormodule (1, 1a-1g) in den Doppelmessbereichen (41) bezüglich der Querrichtung (QR) verkürzt ausgebildet sind im Vergleich zu außerhalb der Doppelmessbereiche (41),
**dass** die wenigstens eine Aktivzone (3, 3a-3c) eines jeweiligen Detektormoduls (1, 1a-1g) mehrere in Messrichtung (MR) aufeinanderfolgende Sensorstreifen (4a-4d) aufweist, die sich zumindest im Wesentlichen in Querrichtung (QR) erstrecken,
und **dass** an allen Positionen entlang der Messrichtung (MR) eine summierte effektive Streifenlänge (SL) in Querrichtung (QR) der Sensorstreifen (4a-4d) aller Detektormodule (1, 1a-1g), die an der jeweiligen Position einen Sensorstreifen (4a-4d) ausbilden, gleich ist.

15. Messanordnung (20) nach einem der vorhergehenden Ansprüche, **dadurch gekennzeichnet, dass** die Detektormodule (1, 1a-1g) als Halbleiter-Detektormodule ausgebildet sind.

16. Messanordnung (20) nach einem der vorhergehenden Ansprüche, **dadurch gekennzeichnet, dass** vor den Detektormodulen (1, 1a-1g) eine Maske (70) angeordnet ist, die zumindest Teilflächen von zumindest einem Teil der Aktivzonen (3, 3a-3c) der Detektormodule (1, 1a-1g) gegenüber der Probenposition (91) abschattet und dadurch eine nutzbare Breite (NB) der Gesamtheit der Aktivzonen (3, 3a-3c) in Querrichtung (QR) gegenüber einer vollen Breite (VB) der Gesamtheit der Aktivzonen (3, 3a-3c) ohne Abschattung reduziert.

17. Verwendung einer Messanordnung (20) nach einem der vorhergehenden Ansprüche zur Vermessung einer Messprobe (96),
wobei die Messprobe (96) mit einem Röntgenstrahl (95) bestrahlt und an der Probenposition (91) angeordnet oder mit einer Röntgenoptik auf die Probenposition (91) abgebildet wird,
und wobei Messdaten der Detektormodule (1, 1a-1g), die gleichzeitig gemessen wurden, zu einem eindimensionalen, bezüglich der Positionen entlang der Messrichtung (MR) lückenlosen Gesamt-Messdatensatz zusammengefasst werden,
wobei an Positionen entlang der Messrichtung (MR), in denen in einem Überlappungsbereich (23a-23e) von wenigstens zwei Detektormodulen (1, 1a-1g) lediglich ein Totbereich (6) wenigstens eines der überlappenden Detektormodule (1, 1a-1g) liegt, Messdaten wenigstens eines anderen der überlappenden Detektormodule (1, 1a-1g) genutzt werden, das an dieser Position eine Aktivzone (3, 3a-3c) hat, um den durchgehenden Gesamt-Messdatensatz zu bestimmen.

## Claims

1. A measurement arrangement (20) for X-ray diffraction, comprising
- a sample position (91) illuminatable by an X-ray beam (95), and
- an X-ray detector (21) for detecting the X-ray radiation emanating from the sample position (91), comprising a plurality of detector modules (1, 1a-1g),
wherein the detector modules (1, 1a-1g) each have at least one active zone (3, 3a-3c), in which X-ray radiation can be detected, and a dead zone (6), in which no X-ray radiation can be detected and which encloses the at least one active zone (3, 3a-3c),
wherein the detector modules (1, 1a-1g) are arranged successively in groups and/or individually in relation to a measurement direction (MR), wherein the active zones (3, 3a-3c) of the detector modules (1, 1a-1g) are configured in each case for X-ray radiation detection which is spatially resolved in the measurement direction (MR),
wherein the totality of the active zones (3, 3a-3c) of all the detector modules (1, 1a-1g) of the X-ray detector (21) has an extent AM in the measurement direction (MR) and an extent AQ in a transverse direction (QR), where AM≥5*AQ, wherein the transverse direction (QR) runs locally transversely with respect to the measurement direction (MR) and locally transversely with respect to a connection direction (VR) to the sample position (91),
wherein at least one portion of the detector modules (1, 1a-1g) that are successive in relation to the measurement direction (MR) forms overlap regions (23a-23e) in which in each case at least two detector modules (1, 1a-1g) overlap in the measurement direction (MR) and are arranged next to one another in the transverse direction (QR),
wherein the active zones (3, 3a-3c) of the detector modules (1, 1a-1g) in the overlap regions (23a-23e) are directly adjacent to one another in the measurement direction (MR) or overlap in the measurement direction (MR), such that the totality of the active zones (3, 3a-3c) of the detector modules (1, 1a-1g) enables the X-ray radiation emanating from the sample position (91) to be measured without gaps in the measurement direction (MR),
and wherein the detector modules (1) are arranged in an overlapping manner along a circular arc (92) around the sample position (91), wherein the circular arc (92) defines the local measurement direction (MR) at each detector module (1),
and the detector modules (1, 1a-1g) are each formed on a planar substrate (2) which is oriented perpendicular to the local connection direction (VR) to the sample position (96), and wherein at the respective detector module (1) the measurement direction (MR), the transverse direction (QR) and the connection direction (VR) are approximately perpendicular to one another.

2. The measurement arrangement (20) as claimed in claim 1, **characterized in that** the detector modules (1, 1a-1g) comprise first detector modules (E) and second detector modules (Z),
wherein the first detector modules (E) are arranged one behind another in a first row (R1) in the measurement direction (MR), and the second detector modules (Z) are arranged one behind another in at least one second row (R2; R2a, R2b) in the measurement direction (MR),
**in that** the first row (R1) and the at least one second row (R2; R2a, R2b) are arranged next to one another in relation to the transverse direction (QR),
and **in that** the first detector modules (E), relative to the second detector modules (Z), are arranged offset relative to one another in the measurement direction (MR), such that the active zones (3, 3a-3c) of the second detector modules (Z) overlap dead zones (6) of the first detector modules (E), which in the measurement direction (MR) are not overlapped by active zones (3, 3a-3c) of the first detector modules (E), in the measurement direction (MR).

3. The measurement arrangement (20) as claimed in claim 2, **characterized in that** for a first length L1 in the measurement direction (MR), over which the active zone (3, 3a-3c) or active zones (3, 3a-3c) of a first detector module (1, 1a-1g) extend(s), and for a second length L2 in the measurement direction (MR), which lies between the active zones (3, 3a-3c) of second detector modules (1, 1a-1g) which are successive in the at least one second row (R2; R2a, R2b) in the measurement direction (MR) and which both form an overlap region (23a-23e) with the first detector module (E), the following holds true in each case:
L2 ≥ 0.2*L1, preferably L2 ≥ 0.4*L1.

4. The measurement arrangement (20) as claimed in either of claims 2 and 3, **characterized in that** the first row (R1) and the at least one second row (R2; R2a, R2b) comprise at least one spacing-exhibiting row in which the detector modules (1, 1a-1g) that are successive in the measurement direction (MR) are arranged in a manner spaced apart from one another with a spacing AB in relation to the measurement direction (MR), in particular wherein it holds true that AB≥0.3*LM, where LM: length of the detector modules (1, 1a-1g) in the spacing-exhibiting row in the measurement direction (MR).

5. The measurement arrangement (20) as claimed in claim 1, **characterized in that** the detector modules (1, 1a-1g) are arranged one behind another in only one row (R) in the measurement direction (MR), wherein in the overlap regions (23a-23e) the detector modules (1, 1a-1g) also overlap in the transverse direction (QR).

6. The measurement arrangement (20) as claimed in any of the preceding claims, **characterized in that** the detector modules (1, 1a-1g) are embodied as approximately wedge-shaped and/or interlocked in the overlap regions (23a-23b).

7. The measurement arrangement (20) as claimed in either of claims 1 to 6, **characterized in that** in the overlap regions (23a-23e) the active zones (3; 3-3c) of the overlapping detector modules (1, 1a-1g) overlap in double measurement regions (41) in the measurement direction (MR).

8. The measurement arrangement (20) as claimed in claim 7, **characterized in that** the active zones (3, 3a-3c) of the detector modules (1, 1a-1g) are embodied in a shortened fashion in relation to the transverse direction (QR) in the double measurement regions (41) in comparison with outside the double measurement regions (41).

9. The measurement arrangement (20) as claimed in either of claims 1 to 6, **characterized in that** in the overlap regions (23a-23e) the active zones (3, 3a-3c) of the overlapping detector modules (1, 1a-1g) do not overlap in the measurement direction (MR).

10. The measurement arrangement (20) as claimed in any of the preceding claims, **characterized in that** the at least one active zone (3, 3a-3c) of a respective detector module (1, 1a-1g) has a plurality of sensor strips (4a-4d) which are successive in the measurement direction (MR) and which extend at least substantially in the transverse direction (QR).

11. The measurement arrangement (20) as claimed in claim 10, **characterized in that** at all positions along the measurement direction (MR) a cumulative effective strip length (SL) in the transverse direction (QR) of the sensor strips (4a-4d) of all the detector modules (1, 1a-1g) which form a sensor strip (4a-4d) at the respective position is identical.

12. The measurement arrangement (20) as claimed in claim 10 or 11, **characterized in that** at least one portion of the sensor strips (4a-4d), preferably each sensor strip (4a-4d), has at least one sensor element (30) having a sensor element aspect ratio SEAV ≥ 3, wherein SEAV = SEB/SEH and SEB: width of the sensor element (30) in the transverse direction (QR), and SEH: height of the sensor element (30) in the measurement direction (MR).

13. The measurement arrangement (20) as claimed in any of claims 10 to 12, **characterized in that** the sensor strips (4a-4d) are embodied as approximately rectangular, wherein the longitudinal sides (5) of the sensor strips (4a-4d) extend in the transverse direction (QR), and wherein the longitudinal sides (5) of sensor strips (4a-4d) of a respective active zone (3, 3a-3c) that are successive in the measurement direction (MR) lie against one another.

14. The measurement arrangement (20) as claimed in any of the preceding claims, **characterized**
**in that** in the overlap regions (23a-23e) the active zones (3; 3-3c) of the overlapping detector modules (1, 1a-1g) overlap in double measurement regions (41) in the measurement direction (MR),
**in that** the active zones (3, 3a-3c) of the detector modules (1, 1a-1g) are embodied in a shortened fashion in relation to the transverse direction (QR) in the double measurement regions (41) in comparison with outside the double measurement regions (41),
**in that** the at least one active zone (3, 3a-3c) of a respective detector module (1, 1a-1g) has a plurality of sensor strips (4a-4d) which are successive in the measurement direction (MR) and which extend at least substantially in the transverse direction (QR),
and **in that** at all positions along the measurement direction (MR) a cumulative effective strip length (SL) in the transverse direction (QR) of the sensor strips (4a-4d) of all the detector modules (1, 1a-1g) which form a sensor strip (4a-4d) at the respective position is identical.

15. The measurement arrangement (20) as claimed in any of the preceding claims, **characterized in that** the detector modules (1, 1a-1g) are embodied as semiconductor detector modules.

16. The measurement arrangement (20) as claimed in any of the preceding claims, **characterized in that** a mask (70) is arranged in front of the detector modules (1, 1a-1g), which mask shades at least partial areas of at least one portion of the active zones (3, 3a-3c) of the detector modules (1, 1a-1g) with regard to the sample position (91) and thereby reduces a usable width (NB) of the totality of the active zones (3, 3a-3c) in the transverse direction (QR) compared with a full width (VB) of the totality of the active zones (3, 3a-3c) without shading.

17. The use of a measurement arrangement (20) as claimed in any of the preceding claims for measuring a measurement sample (96),
wherein the measurement sample (96) is irradiated by an X-ray beam (95) and is arranged at the sample position (91) or is imaged onto the sample position (91) by an X-ray optical unit,
and wherein measurement data of the detector modules (1, 1a-1g) which were measured simultaneously are combined to form a one-dimensional total measurement data set having no gaps in relation to the positions along the measurement direction (MR),
wherein at positions along the measurement direction (MR) in which, in an overlap region (23a-23e) of at least two detector modules (1, 1a-1g), there lies only a dead zone (6) of at least one of the overlapping detector modules (1, 1a-1g), measurement data of at least one other detector module of the overlapping detector modules (1, 1a-1g) which has an active zone (3, 3a-3c) at this position are used in order to determine the continuous total measurement data set.

## Revendications

1. Dispositif de mesure (20) pour une diffraction de rayons X, comprenant
- une position d'échantillon (91) pouvant être éclairée par faisceau de rayons X (95), et
- un détecteur de rayons X (21) pour une détection de rayons X provenant de la position d'échantillon (91), comprenant plusieurs modules de détecteur (1, 1a-1g), les modules de détecteur (1, 1a-1g) présentant chacun au moins une zone active (3, 3a-3c) dans laquelle des rayons X peuvent être détectés, et une zone inactive (6) dans laquelle aucun rayon X ne peut être détecté, et qui entoure ladite au moins une zone active (3, 3a-3c),
les modules de détecteur (1, 1a-1g) étant agencés individuellement et/ou en groupes successifs par rapport à une direction de mesure (MR),
les zones actives (3, 3a-3c) des modules de détecteur (1, 1a-1g) étant chacune conçues pour une détection des rayons X par résolution locale dans la direction de mesure (MR),
l'ensemble des zones actives (3, 3a-3c) de tous les modules détecteurs (1, 1a-1g) du détecteur de rayons X (21) présentant une extension AM dans la direction de mesure (MR) et une extension AQ dans une direction transversale (QR), avec AM ≥ 5*AQ, la direction transversale (QR) étant localement transversale à la direction de mesure (MR) et localement transversale à une direction de liaison (VR) à la position d'échantillon (91),
au moins une partie des modules de détecteur (1, 1a-1g) qui se suivent par rapport à la direction de mesure (MR) formant des zones de chevauchement (23a-23e) dans lesquelles au moins deux modules de détecteur (1, 1a-1g) se chevauchent dans la direction de mesure (MR) et sont agencés l'un à côté de l'autre dans la direction transversale (QR),
les zones actives (3, 3a-3c) des modules de détecteur (1, 1a-1g) dans les zones de chevauchement (23a-23e) se raccordant directement les unes aux autres dans la direction de mesure (MR) ou se chevauchant dans la direction de mesure (MR), de sorte que l'ensemble des zones actives (3, 3a-3c) des modules de détecteur (1, 1a-1g) permet une mesure complète dans la direction de mesure (MR) des rayons X provenant de la position d'échantillon (91),
et les modules de détecteur (1) étant agencés le long d'un arc de cercle (92) se chevauchant autour de la position d'échantillon (91), l'arc de cercle (92) définissant la direction de mesure locale (MR) au niveau de chaque module de détecteur (1), et les modules de détecteur (1, 1a-1g) étant formés chacun sur un substrat plan (2) qui est orienté perpendiculairement à la direction de liaison locale (VR) à la position d'échantillon (96), et au niveau du module de détecteur respectif (1), la direction de mesure (MR), la direction transversale (QR) et la direction de liaison (VR) étant approximativement mutuellement perpendiculaires.

2. Dispositif de mesure (20) selon la revendication 1, **caractérisé en ce que** les modules de détecteur (1, 1a-1g) comprennent des premiers modules de détecteur (E) et des seconds modules de détecteur (Z),
les premiers modules de détecteur (E) étant agencés les uns derrière les autres en une première rangée (R1) dans la direction de mesure (MR), et les seconds modules de détecteur (Z) étant agencés les uns derrière les autres en au moins une seconde rangée (R2 ; R2a, R2b) dans la direction de mesure (MR),
**en ce que** la première rangée (R1) et la au moins une seconde rangée (R2 ; R2a, R2b) sont agencés côte à côte par rapport à la direction transversale (QR), et **en ce que** les premiers modules détecteurs (E) sont agencés décalés les uns par rapport aux autres par rapport aux seconds modules détecteurs (Z) dans la direction de mesure (MR), de sorte que les zones actives (3, 3a-3c) des seconds modules de détecteur (Z) chevauchent dans la direction de mesure (MR) des zones inactives (6) des premiers modules de détecteur (E) qui ne sont pas chevauchées dans la direction de mesure (MR) par des zones actives (3, 3a-3c) des premiers modules de détecteur (E).

3. Dispositif de mesure (20) selon la revendication 2, **caractérisé en ce que** pour une première longueur L1 dans la direction de mesure (MR), sur laquelle s'étendent la zone active (3, 3a-3c) ou les zones actives (3, 3a-3c) d'un premier module de détecteur (1, 1a-1g), et pour une seconde longueur L2 dans la direction de mesure (MR), qui est située entre les zones actives (3, 3a-3c) d'au moins un seconde rangée (R2 ; R2a, R2b) de modules de détecteur (1, 1a-1g) successifs dans la direction de mesure (MR), qui forment ensemble une zone de chevauchement (23a-23e) avec le premier module de détecteur (E), s'applique respectivement : L2 ≥ 0,2*L1, de préférence L2 ≥ 0,4*L1.

4. Dispositif de mesure (20) selon l'une quelconque des revendications 2 ou 3, **caractérisé en ce que** la première rangée (R1) et la au moins une seconde rangée (R2 ; R2a, R2b) comprennent au moins une rangée espacée dans laquelle les modules de détecteur (1, 1a-1g) successifs dans la direction de mesure (MR) sont agencés à une distance AB les uns des autres par rapport à la direction de mesure (MR),
en particulier avec AB ≥ 0,3*LM, avec LM : longueur des modules de détecteur (1, 1a-1g) dans la rangée espacée dans la direction de mesure (MR).

5. Dispositif de mesure (20) selon la revendication 1, **caractérisé en ce que** les modules de détecteur (1, 1a-1g) sont agencés les uns derrière les autres en une seule rangée (R) dans la direction de mesure (MR), les modules de détecteur (1, 1a-1g) se chevauchant également dans la direction transversale (QR) dans les zones de chevauchement (23a-23e).

6. Dispositif de mesure (20) selon l'une quelconque des revendications précédentes, **caractérisé en ce que** les modules de détecteur (1, 1a-1g) sont réalisés approximativement en forme de coin et/ou dentés dans les zones de chevauchement (23a-23b).

7. Dispositif de mesure (20) selon l'une quelconque des revendications 1 à 6, **caractérisé en ce que** dans les zones de chevauchement (23a-23e), les zones actives (3 ; 3-3c) des modules de détecteur (1, 1a-1g) qui se chevauchent se chevauchent dans la direction de mesure (MR) dans des zones de mesure doubles (41).

8. Dispositif de mesure (20) selon la revendication 7, **caractérisé en ce que** les zones actives (3, 3a-3c) des modules de détecteur (1, 1a-1g) sont formées raccourcies dans les zones de mesure doubles (41) par rapport à la direction transversale (QR) par comparaison à l'extérieur des zones de mesure doubles (41).

9. Dispositif de mesure (20) selon l'une quelconque des revendications 1 à 6, **caractérisé en ce que**, dans les zones de chevauchement (23a-23e), les zones actives (3, 3a-3c) des modules de détecteur (1, 1a-1g) qui se chevauchent ne se chevauchent pas dans la direction de mesure (MR).

10. Dispositif de mesure (20) selon l'une quelconque des revendications précédentes, **caractérisé en ce que** la au moins une zone active (3, 3a-3c) d'un module de détecteur respectif (1, 1a-1g) présente plusieurs bandes de capteur (4a-4d) qui se suivent dans la direction de mesure (MR) et qui s'étendent au moins sensiblement dans la direction transversale (QR).

11. Dispositif de mesure (20) selon la revendication 10, **caractérisé en ce qu'**à toutes les positions le long de la direction de mesure (MR), une longueur de bande effective additionnée (SL) dans la direction transversale (QR) des bandes de capteur (4a-4d) de tous les modules de détecteur (1, 1a-1g) qui forment une bande de capteur (4a-4d) à la position respective est identique.

12. Dispositif de mesure (20) selon la revendication 10 ou 11, **caractérisé en ce qu'**au moins une partie des bandes de capteur (4a-4d), de préférence chaque bande de capteur (4a-4d), présente au moins un élément de capteur (30) qui présente un rapport d'aspect d'élément de capteur SEAV ≥ 3, SEAV = SEB/SEH et SEB : largeur de l'élément capteur (30) dans la direction transversale (QR), et SEH : hauteur de l'élément capteur (30) dans la direction de mesure (MR).

13. Dispositif de mesure (20) selon l'une quelconque des revendications 10 à 12, **caractérisé en ce que** les bandes de capteur (4a-4d) sont réalisés de forme approximativement rectangulaire, les côtés longitudinaux (5) des bandes de capteur (4a-4d) s'étendant dans la direction transversale (QR), et les bandes de capteur (4a-4d) successives d'une zone active respective (3, 3a-3c) dans la direction de mesure (MR) s'appliquant les unes contre les autres par leurs côtés longitudinaux (5).

14. Dispositif de mesure (20) selon l'une quelconque des revendications précédentes, **caractérisé en ce que** :
dans les zones de chevauchement (23a-23e), les zones actives (3 ; 3-3c) des modules détecteurs se chevauchant (1, 1a-1g) se chevauchent dans la direction de mesure (MR) dans les zones de mesure doubles (41),
les zones actives (3, 3a-3c) des modules de détecteur (1, 1a-1g) dans les zones de mesure doubles (41) sont raccourcies par rapport à la direction transversale (QR) par comparaison à l'extérieur des zones de mesure doubles (41),
la au moins une zone active (3, 3a-3c) d'un module de détecteur (1, 1a-1g) respectif présente plusieurs bandes de capteur (4a-4d) qui se suivent dans la direction de mesure (MR) et qui s'étendent au moins essentiellement dans la direction transversale (QR),
et **en ce qu'**à toutes les positions le long de la direction de mesure (MR), une longueur de bande effective additionnée (SL) dans la direction transversale (QR) des bandes de capteur (4a-4d) de tous les modules de détecteur (1, 1a-1g) qui forment une bande de capteur (4a-4d) à la position respective est la même.

15. Dispositif de mesure (20) selon l'une quelconque des revendications précédentes, **caractérisé en ce que** les modules de détecteur (1, 1a-1g) sont conçus comme des modules de détecteur à semi-conducteur.

16. Dispositif de mesure (20) selon l'une quelconque des revendications précédentes, **caractérisé en ce qu'**un masque (70) est agencé devant les modules de détecteur (1, 1a-1g), qui masque au moins des surfaces partielles d'au moins une partie des zones actives (3, 3a-3c) des modules de détecteur (1, 1a-1g) par rapport à la position d'échantillon (91) et réduit ainsi une largeur utilisable (NB) de l'ensemble des zones actives (3, 3a-3c) dans la direction transversale (QR) par rapport à une largeur complète (VB) de l'ensemble des zones actives (3, 3a-3c) sans masquage.

17. Utilisation d'un dispositif de mesure (20) selon l'une quelconque des revendications précédentes pour mesurer un échantillon de mesure (96),
l'échantillon de mesure (96) étant irradié avec des rayons X (95) et agencé dans la position d'échantillon (91) ou imagé avec une optique à rayons X dans la position d'échantillon (91),
et les données de mesure des modules de détecteur (1, 1a-1g), qui ont été mesurés simultanément, sont combinées de manière complète en un ensemble de données de mesure total à une dimension, par rapport aux positions le long de la direction de mesure (MR),
les données de mesure d'au moins un autre des modules de détecteur se chevauchant (1, 1a-1g), qui présente une zone active (3, 3a-3c) dans cette position, sont utilisées à des positions le long de la direction de mesure (MR) dans lesquelles seule une zone inactive (6) d'au moins un des modules de détecteur se chevauchant (1, 1a-1g) est située dans une zone de chevauchement (23a-23e) d'au moins deux modules de détecteur (1, 1a-1g), afin de déterminer l'ensemble de données de mesure total continu.
